# EUROPEAN PATENT SPECIFICATION

(11) **EP 3 032 854 B1**
(45) Date of publication and mention of the grant of the patent: **06.09.2017**
(21) Application number: 14849716.7
(22) Date of filing: 21.03.2014
(51) Int. Cl.: H04W 8/02

(54) **INFORMATION DETERMINATION METHOD AND RELATED DEVICE**
INFORMATIONSBESTIMMUNGSVERFAHREN UND ZUGEHÖRIGE VORRICHTUNG
PROCÉDÉ DE DÉTERMINATION D'INFORMATIONS ET DISPOSITIF ASSOCIÉ

(30) Priority: 26.09.2013 WO PCT/CN2013/084313
(43) Date of publication of application: 15.06.2016
(73) Proprietor: Huawei Technologies Co., Ltd., Longgang District Shenzhen, Guangdong 518129 (CN)
(72) Inventor: ZHANG, Liangliang, Shenzhen Guangdong 518129 (CN); WANG, Yan, Shenzhen Guangdong 518129 (CN)
(74) Representative: Gill Jennings & Every LLP
(86) International application number: PCT/CN2014/073871
(87) International publication number: WO 2015/043143

(56) References cited:
- WO-A1-2015/142078
- CN-A- 101 540 992
- CN-A- 102 378 145
- CN-A- 103 326 770
- US-A1- 2013 157 712
- US-A1- 2013 194 937
- "3rd Generation Partnership Project; Technical Specification Group Radio Access Network; Evolved Universal Terrestrial Radio Access (E-UTRA); Study on Small Cell Enhancements for E-UTRA and E-UTRAN - Higher layer aspects (Release", 3GPP STANDARD; 3GPP TR 36.842, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V0.2.1, 23 August 2013 (2013-08-23), pages 1-51, XP050769464, [retrieved on 2013-08-23]

## Description

### TECHNICAL FIELD

The present invention relates to the communications field, and in particular, to an information determining method and a related device.

### BACKGROUND

A new type of network deployment, that is, a heterogeneous network (HetNet) deployment, is gradually introduced to a next generation wireless network. In a HetNet, some low power nodes are deployed in coverage of macro cells (Macro cell). These low power nodes may be one or more of the following types: a remote radio head (RRH, Remote Radio Head), a pico eNodeB (Pico eNB), a home eNodeB (HeNB), a relay node (RN, relay node), and a wireless local area network access point AP (AP, Access Point) (for example, a WiFi AP). Cells of these low power nodes may be referred to as small cells (small cell) because coverage of the cells of these low power nodes is smaller than that of the macro cells. The macro cells provide seamless coverage for a user, and these small cells may improve a system capacity.

A simultaneous deployment of a small cell and a macro network is an important scenario. In this scenario, the small cell and the macro network may serve a UE together. In this way, a quantity of handover times of a terminal can be reduced, and a system capacity, and the like can be improved.

However, in the prior art, user data needs to be offloaded from a serving gateway (Serving GateWay, SGW), but a base station does not know serving gateways to which the base station is connected, and the base station does not know a serving gateway to which a peer base station is connected. Therefore, the base station cannot actively request another suitable base station to provide a service for the UE together.

US2013157712 describes a method of managing mobility of a user equipment. The method includes: establishing by a first base station a communication with the user equipment; transmitting by the first base station a Coordinated Multiple Point (CoMP) addition request to a second base station; establishing by the first and second base stations a CoMP communication with the user equipment according to the CoMP addition request; transmitting by the first base station an anchor cell change request to the second base station; and operating the second base station as an anchor cell of the CoMP communication according to the anchor cell switch request.

### SUMMARY

Embodiments of the present invention provide an information determining method and a related device, so as to determine serving gateway information between stations.

A first aspect of the embodiments of the present invention provides an information determining method, including:
receiving, by a first station, a first message sent by an information management entity, where the first message includes information about a connection relationship between a second station and a serving gateway; and
determining, by the first station according to the first message, whether the second station is connected to a user equipment gateway, where the user equipment gateway is a serving gateway connected to the first station and provides a service for user equipment.

In a first possible implementation manner of the first aspect, before the receiving a first message sent by an information management entity, the method includes:
sending, by the first station, a second message to the information management entity, where the second message includes: an identifier of the second station, an identifier of the first station, or the identifier of the first station and the identifier of the second station.

In a second possible implementation manner of the first aspect, before the receiving a first message sent by an information management entity, the method includes:
sending, by the first station, an identifier of the user equipment and/or an IP address of the user equipment gateway to the information management entity.

With reference to the first aspect and either the first or the second possible implementation manner of the first aspect, in a third possible implementation manner of the first aspect, the serving gateway includes a first gateway or a second gateway, where the first gateway is a serving gateway connected to the first station, and the second gateway is a serving gateway connected to the second station; and
accordingly, the information about the connection relationship between the second station and the serving gateway includes an identifier of the first gateway or an identifier of the second gateway.

With reference to the first aspect and either the first or the second possible implementation manner of the first aspect, in a fourth possible implementation manner of the first aspect, the information about the connection relationship between the second station and the serving gateway includes:
information indicating whether the second station is connected to the user equipment gateway; or
an identifier of a second station connected to the user equipment gateway; or
an identifier of a second station not connected to the user equipment gateway.

With reference to the fourth possible implementation manner of the first aspect, in a fifth possible implementation manner of the first aspect, the determining, according to the first message, whether the second station is connected to a user equipment gateway includes:
determining, according to the information indicating whether the second station is connected to the user equipment gateway, whether the second station is connected to the user equipment gateway; or
determining, according to the identifier of the second station connected to the user equipment gateway or the identifier of the second station not connected to the user equipment gateway, whether the second station is connected to the user equipment gateway.

With reference to the third possible implementation manner of the first aspect, in a sixth possible implementation manner of the first aspect, before the determining, according to the first message, whether the second station is connected to a user equipment gateway, the method further includes:
acquiring, by the first station, an identifier of the user equipment gateway from the information management entity; and
the determining, according to the first message, whether the second station is connected to a user equipment gateway includes:
   determining, according to the identifier of the user equipment gateway and the identifier of the second gateway, whether the second station is connected to the user equipment gateway.

With reference to the first aspect and any one of the first to the sixth possible implementation manners of the first aspect, in a seventh possible implementation manner of the first aspect, before the sending, by the first station, a second message to the information management entity, the method includes:
receiving, by the first station, a third message sent by the second station, where the third message is used to request the first station to provide a service for the user equipment, and the second station is a serving station of the user equipment.

With reference to the seventh possible implementation manner of the first aspect, in an eighth possible implementation manner of the first aspect, after the determining, according to the first message, whether the second station is connected to a user equipment gateway, the method includes:
if the second station is connected to the user equipment gateway, returning a fourth message to the second station, where the fourth message is used to indicate agreeing to provide a service for the user equipment;
   or
if the second station is not connected to the user equipment gateway, returning a fifth message to the second station, where the fifth message is used to indicate refusing to provide a service for the user equipment.

With reference to the first aspect and any one of the first to the sixth possible implementation manners of the first aspect, in a ninth possible implementation manner of the first aspect, after the determining, according to the first message, whether the second station is connected to a user equipment gateway, the method includes:
if the second station is connected to the user equipment gateway, sending, by the first station, a sixth message to the second station, where the sixth message is used to request the second station to provide a service for the user equipment, and the first station is a serving station of the user equipment.

With reference to either the first or the second possible implementation manner of the first aspect, in a tenth possible implementation manner of the first aspect,
the identifier of the first station includes at least one of a tracking area identity TAI, a station identifier eNB ID, a station identifier index eNB ID index, and a cell global identifier ECGI.

With reference to any one of the first, the fourth, and the fifth possible implementation manners of the first aspect, in an eleventh possible implementation manner of the first aspect,
the identifier of the second station includes at least one of a tracking area identity TAI, a station identifier eNB ID, a station identifier index eNB ID index, and a cell global identifier ECGI.

With reference to any one of the second, the fourth, and the seventh to the ninth possible implementation manners of the first aspect, in a twelfth possible implementation manner of the first aspect,
the identifier of the user equipment includes any one of or a combination of more than two of an international mobile subscriber identity IMSI, a globally unique mobility management entity identifier GUMMEI, an eNB UE S1AP ID, and an MME eNB UE S1AP ID.

With reference to the first aspect and any one of the first to the twelfth possible implementation manners of the first aspect, in a thirteenth possible implementation manner of the first aspect,
the identifier of the user equipment gateway, the first gateway, or the second gateway includes any one of or a combination of more than one of an SGW ID, an SGW ID index, an SGW name, a PGW ID, a PGW ID index, and a PGW name.

A second aspect of the embodiments of the present invention provides an information determining method, including:
determining, by an information management entity, information about a connection relationship between a second station and a serving gateway; and
sending, by the information management entity, a first message to a first station, so that the first station determines, according to the first message, whether the second station is connected to a user equipment gateway, where the first message includes the information about the connection relationship between the second station and the serving gateway, and the user equipment gateway is a serving gateway connected to the first station and provides a service for user equipment.

In a first possible implementation manner of the second aspect, before the determining information about a connection relationship between a second station and a serving gateway, the method includes:
receiving, by the information management entity, a second message sent by the first station, where the second message includes: an identifier of the second station, or an identifier of the first station and the identifier of the second station.

In a second possible implementation manner of the second aspect, before the determining information about a connection relationship between a second station and a serving gateway, the method includes:
sending, by the first station, an identifier of the user equipment and/or an IP address of the user equipment gateway to the information management entity.

With reference to the second aspect and either the first or the second possible implementation manner of the second aspect, in a third possible implementation manner of the second aspect, the determining information about a connection relationship between a second station and a serving gateway includes:
creating a fully qualified domain name of the second station according to the identifier of the second station, and performing a query in a domain name system DNS according to the fully qualified domain name, to determine a serving gateway connected to the second station; or
determining, according to the identifier of the second station and a serving gateway list stored in the information management entity, a serving gateway connected to the second station, where the serving gateway list is a list of a correspondence between the identifier of the second station and the serving gateway.

In a fourth possible implementation manner of the second aspect,
the serving gateway includes:
a second gateway, where the second gateway is a serving gateway connected to the second station; and
accordingly, the first message includes/the information about the connection relationship between the second station and the serving gateway includes: an identifier of the second gateway.

With reference to the second aspect and any one of the first to the fourth possible implementation manners of the second aspect, in a fifth possible implementation manner of the second aspect, that the first message includes the information about the connection relationship between the second station and the serving gateway includes:
information indicating whether the second station is connected to the user equipment gateway; or
an identifier of a second station connected to the user equipment gateway; or
an identifier of a second station not connected to the user equipment gateway.

A third aspect of the embodiments of the present invention provides an information determining method, including:
receiving, by a first station, an identifier that is of a user equipment gateway and sent by an information management entity, where the user equipment gateway is a serving gateway connected to the first station and provides a service for user equipment; and
determining, by the first station according to the identifier of the user equipment gateway, a station connected to the user equipment gateway.

In a first possible implementation manner of the third aspect, before the receiving an identifier that is of a user equipment gateway and sent by an information management entity, the method further includes:
sending, by the first station, a first message to the information management entity, where the first message includes an IP address of the user equipment gateway and/or an identifier of the user equipment.

With reference to the third aspect or the first possible implementation manner of the third aspect, in a second possible implementation manner of the third aspect, before the determining, according to the identifier of the user equipment gateway, a station connected to the user equipment gateway, the method further includes:
receiving an identifier that is of the station connected to the user equipment gateway and sent by the information management entity; and
the determining, according to the identifier of the user equipment gateway, a station connected to the user equipment gateway includes:
   determining, according to the identifier of the station connected to the user equipment gateway, the station connected to the user equipment gateway.

With reference to the third aspect or the first possible implementation manner of the third aspect, in a third possible implementation manner of the third aspect, the method further includes:
receiving an identifier that is of a station connected to a first gateway and sent by the information management entity, where the first gateway is a serving gateway connected to the first station; and
the determining, according to the identifier of the user equipment gateway, a station connected to the user equipment gateway includes:
   determining, according to the identifier of the user equipment gateway and the identifier of the station connected to the first gateway, the station connected to the user equipment gateway.

With reference to the third aspect or the first possible implementation manner of the third aspect, in a fourth possible implementation manner of the third aspect, the method further includes:
receiving an identifier that is of a first gateway and sent by the information management entity, where the first gateway is a serving gateway connected to the first station.

With reference to the third aspect or the first possible implementation manner of the third aspect, in a fifth possible implementation manner of the third aspect, before the determining, according to the identifier of the user equipment gateway, a station connected to the user equipment gateway, the method further includes:
receiving a second response message sent by a second station, where the second response message includes an identifier of a second gateway; and
the determining, according to the identifier of the user equipment gateway, a station connected to the user equipment gateway includes:
   determining, according to the identifier of the user equipment gateway and the identifier of the second gateway, whether the second station is connected to the user equipment gateway.

With reference to the fourth possible implementation manner of the third aspect, in a sixth possible implementation manner of the third aspect, before the determining, according to the identifier of the user equipment gateway, a station connected to the user equipment gateway, the method includes:
sending a second message to a second station, where the second message includes the identifier of the first gateway, so that the second station returns an identifier of a second gateway, and the second gateway is a serving gateway connected to the second station; and
receiving a second response message sent by the second station, where the second response message includes the identifier of the second gateway; and
the determining, according to the identifier of the user equipment gateway, a station connected to the user equipment gateway includes:
   determining, according to the identifier of the user equipment gateway and the identifier of the second gateway, whether the second station is connected to the user equipment gateway.

With reference to the third aspect or the first possible implementation manner of the third aspect, in a seventh possible implementation manner of the third aspect, before the determining, according to the identifier of the user equipment gateway, a station connected to the user equipment gateway, the method further includes:
sending a third message to a second station, where the third message includes the identifier of the user equipment gateway, so that the second station determines, according to the identifier of the user equipment gateway and an identifier of a second gateway, whether the second station is connected to the user equipment gateway.

With reference to the seventh possible implementation manner of the third aspect, in an eighth possible implementation manner of the third aspect, after the sending a third message to a second station, the method includes:
receiving, by the first station, a third response message sent by the second station, where the third response message is used to indicate whether the second station is connected to the user equipment gateway, or indicate agreeing to provide a service for the user equipment.

With reference to the eighth possible implementation manner of the third aspect, in a ninth possible implementation manner of the third aspect, the determining, according to the identifier of the user equipment gateway, a station connected to the user equipment gateway includes:
determining, according to an indication of the third response message, whether the second station is connected to the user equipment gateway.

With reference to any one of the fourth to the ninth possible implementation manners of the third aspect, in a tenth possible implementation manner of the third aspect, after the determining, according to the identifier of the user equipment gateway, a station connected to the user equipment gateway, the method further includes:
if it is determined that the second station is connected to the user equipment gateway, sending, by the first station, a fourth message to the second station, where the fourth message is used to request the second station to provide a service for the user equipment, and the first station is a serving station of the user equipment.

With reference to any one of the fourth to the ninth possible implementation manners of the third aspect, in an eleventh possible implementation manner of the third aspect,
the identifier of the first gateway or the second gateway includes any one of or a combination of more than one of an SGW ID, an SGW ID index, an SGW name, a PGW ID, a PGW ID index, and a PGW name.

With reference to any one of the fifth to the seventh possible implementation manners of the third aspect, in a twelfth possible implementation manner of the third aspect,
the identifier of the first gateway or the second gateway includes any one of or a combination of more than one of an SGW ID, an SGW ID index, an SGW name, a PGW ID, a PGW ID index, and a PGW name.

A fourth aspect of the embodiments of the present invention provides an information determining method, including:
determining, by an information management entity, a user equipment gateway, where the user equipment gateway is a serving gateway connected to a first station and provides a service for user equipment; and
sending, by the information management entity, an identifier of the user equipment gateway to the first station, so that the first station determines, according to the identifier of the user equipment gateway, a station connected to the user equipment gateway.

In a first possible implementation manner of the fourth aspect,
before the determining a user equipment gateway, the method includes: receiving, by the information management entity, a first message sent by the first station, where the first message includes an IP address of the user equipment gateway and/or an identifier of the user equipment; or
before the determining a user equipment gateway, the method further includes: acquiring an identifier of the first station.

In a second possible implementation manner of the fourth aspect, the first message includes:
an S1 user equipment context setup request message or a bearer setup request message.

In a third possible implementation manner of the fourth aspect, the determining, by an information management entity, a user equipment gateway includes:
determining, by the information management entity, the user equipment gateway according to an identifier of the user equipment.

With reference to the first possible implementation manner of the fourth aspect, in a third possible implementation manner of the fourth aspect, after the acquiring an identifier of the first station, the method includes:
creating a fully qualified domain name of the first station according to the identifier of the first station, and performing a query on a DNS server according to the fully qualified domain name, to determine a serving gateway connected to the first station; or
determining, according to the identifier of the first station and a serving gateway list stored in the information management entity, a serving gateway connected to the first station, where the serving gateway list is a list of a correspondence between the identifier of the first station and the serving gateway; and
the method further includes: sending an identifier of a first gateway to the first station, or sending an identifier of a station connected to the first gateway.

A fifth aspect of the embodiments of the present invention provides a station, including:
a message receiving unit, configured to receive a first message sent by an information management entity, where the first message includes information about a connection relationship between a second station and a serving gateway; and
a connection relationship determining unit, configured to determine, according to the first message, whether the second station is connected to a user equipment gateway, where the user equipment gateway is a serving gateway connected to a first station and provides a service for user equipment.

In a first possible implementation manner of the fifth aspect, the station further includes:
a message sending unit, configured to send a second message to the information management entity, where the second message includes an identifier of the second station, an identifier of the first station, or the identifier of the first station and the identifier of the second station.

In a second possible implementation manner of the fifth aspect, the message sending unit is further specifically configured to send an identifier of the user equipment and/or an IP address of the user equipment gateway to the information management entity.

With reference to the fifth aspect and either the first or the second possible implementation manner of the fifth aspect, in a third possible implementation manner of the fifth aspect, the serving gateway includes a first gateway or a second gateway, where the first gateway is a serving gateway connected to the first station, and the second gateway is a serving gateway connected to the second station; and
accordingly, the information about the connection relationship between the second station and the serving gateway includes an identifier of the first gateway or an identifier of the second gateway.

With reference to the fifth aspect and either the first or the second possible implementation manner of the fifth aspect, in a fourth possible implementation manner of the fifth aspect, the information about the connection relationship between the second station and the serving gateway includes:
information indicating whether the second station is connected to the user equipment gateway; or
an identifier of a second station connected to the user equipment gateway; or
an identifier of a second station not connected to the user equipment gateway.

With reference to the fourth possible implementation manner of the fifth aspect, the connection relationship determining unit is specifically configured to:
determine, according to the information indicating whether the second station is connected to the user equipment gateway, whether the second station is connected to the user equipment gateway; or
configured to determine, according to the identifier of the second station connected to the user equipment gateway or the identifier of the second station not connected to the user equipment gateway, whether the second station is connected to the user equipment gateway.

With reference to the third possible implementation manner of the fifth aspect, in a sixth possible implementation manner of the fifth aspect, the message receiving unit 1101 is further configured to acquire an identifier of the user equipment gateway from the information management entity; and
the connection relationship determining unit is further specifically configured to:
determine, according to the identifier of the user equipment gateway and the identifier of the second gateway, whether the second station is connected to the user equipment gateway.

With reference to the fifth aspect and any one of the first to the sixth possible implementation manners of the fifth aspect, in a seventh possible implementation manner of the fifth aspect, the message receiving unit is further configured to:
receive a third message sent by the second station, where the third message is used to request the first station to provide a service for the user equipment, and the second station is a serving station of the user equipment.

With reference to the seventh possible implementation manner of the fifth aspect, in an eighth possible implementation manner of the fifth aspect, the message sending unit is further configured to: if the second station is connected to the user equipment gateway, return a fourth message to the second station, where the fourth message is used to indicate agreeing to provide a service for the user equipment; or if the second station is not connected to the user equipment gateway, return a fifth message to the second station, where the fifth message is used to indicate refusing to provide a service for the user equipment.

With reference to the fifth aspect and any one of the first to the sixth possible implementation manners of the fifth aspect, in a ninth possible implementation manner of the fifth aspect, the message sending unit is further configured to:
if the second station is connected to the user equipment gateway, send a sixth message to the second station, where the sixth message is used to request the second station to provide a service for the user equipment, and the first station is a serving station of the user equipment.

With reference to either the first or the second possible implementation manner of the fifth aspect, in a tenth possible implementation manner of the fifth aspect,
the identifier of the first station includes at least one of a tracking area identity TAI, a station identifier eNB ID, a station identifier index eNB ID index, and a cell global identifier ECGI.

With reference to any one of the first, the fourth, or the fifth possible implementation manner of the fifth aspect, in an eleventh possible implementation manner of the fifth aspect,
the identifier of the second station includes at least one of a tracking area identity TAI, a station identifier eNB ID, a station identifier index eNB ID index, and a cell global identifier ECGI.

With reference to any one of the second, the fourth, and the seventh to the ninth possible implementation manners of the fifth aspect, in a twelfth possible implementation manner of the fifth aspect,
the identifier of the user equipment includes any one of or a combination of more than two of an international mobile subscriber identity IMSI, a globally unique mobility management entity identifier GUMMEI, an eNB UE S1AP ID, and an MME eNB UE S1AP ID.

With reference to the fifth aspect and any one of the first to the twelfth possible implementation manners of the fifth aspect, in a thirteenth possible implementation manner of the fifth aspect,
the identifier of the user equipment gateway, the first gateway, or the second gateway includes any one of or a combination of more than one of an SGW ID, an SGW ID index, an SGW name, a PGW ID, a PGW ID index, and a PGW name.

A sixth aspect of the embodiments of the present invention provides an information management entity, including:
a station determining unit, configured to determine information about a connection relationship between a second station and a serving gateway; and
an information sending unit, configured to send a first message to a first station, so that the first station determines, according to the first message, whether the second station is connected to a user equipment gateway, where the first message includes the information about the connection relationship between the second station and the serving gateway, and the user equipment gateway is a serving gateway connected to the first station and provides a service for user equipment.

In a first possible implementation manner of the sixth aspect, the information management entity further includes:
an information receiving unit, configured to receive a second message sent by the first station, where the second message includes: an identifier of the second station, or an identifier of the first station and the identifier of the second station.

In a second possible implementation manner of the sixth aspect, the information sending unit is further configured to send an identifier of the user equipment and/or an IP address of the user equipment gateway to the information management entity.

With reference to the sixth aspect and either the first or the second possible implementation manner of the sixth aspect, in a third possible implementation manner of the sixth aspect, the station determining unit is specifically configured to:
create a fully qualified domain name of the second station according to the identifier of the second station, and perform a query in a domain name system DNS according to the fully qualified domain name, to determine a serving gateway connected to the second station; or
determine, according to the identifier of the second station and a serving gateway list stored in the information management entity, a serving gateway connected to the second station, where the serving gateway list is a list of a correspondence between the identifier of the second station and the serving gateway.

In a fourth possible implementation manner of the sixth aspect,
the serving gateway includes:
a second gateway, where the second gateway is a serving gateway connected to the second station; and
accordingly, the first message includes/the information about the connection relationship between the second station and the serving gateway includes: an identifier of the second gateway.

With reference to the sixth aspect and any one of the first to the fourth possible implementation manners of the sixth aspect, in a fifth possible implementation manner of the sixth aspect, that the first message includes the information about the connection relationship between the second station and the serving gateway includes:
information indicating whether the second station is connected to the user equipment gateway; or
an identifier of a second station connected to the user equipment gateway; or
an identifier of a second station not connected to the user equipment gateway.

A seventh aspect of the embodiments of the present invention provides a station, including:
a receiving unit, configured to receive an identifier that is of a user equipment gateway and sent by an information management entity, where the user equipment gateway is a serving gateway connected to a first station and provides a service for user equipment; and
a connection determining unit, configured to determine according to the identifier of the user equipment gateway, a station connected to the user equipment gateway.

In a first possible implementation manner of the seventh aspect, the station further includes:
a sending unit, configured to send a first message to the information management entity, where the first message includes an IP address of the user equipment gateway and/or an identifier of the user equipment.

With reference to the seventh aspect or the first possible implementation manner of the seventh aspect, in a second possible implementation manner of the seventh aspect, the receiving unit is further configured to receive an identifier that is of the station connected to the user equipment gateway and sent by the information management entity; and
the connection determining unit is further specifically configured to:
determine, according to the identifier of the station connected to the user equipment gateway, the station connected to the user equipment gateway.

With reference to the seventh aspect or the first possible implementation manner of the seventh aspect, in a third possible implementation manner of the seventh aspect, the receiving unit is further configured to receive an identifier that is of a station connected to a first gateway and sent by the information management entity, where the first gateway is a serving gateway connected to the first station; and
the connection determining unit is further specifically configured to:
determine, according to the identifier of the user equipment gateway and the identifier of the station connected to the first gateway, the station connected to the user equipment gateway.

With reference to the seventh aspect or the first possible implementation manner of the seventh aspect, in a fourth possible implementation manner of the seventh aspect, the receiving unit is further configured to receive an identifier that is of a first gateway and sent by the information management entity, where the first gateway is a serving gateway connected to the first station.

With reference to the seventh aspect or the first possible implementation manner of the seventh aspect, in a fifth possible implementation manner of the seventh aspect, the receiving unit is further configured to receive a second response message sent by a second station, where the second response message includes an identifier of a second gateway; and
the connection determining unit is further specifically configured to:
determine, according to the identifier of the user equipment gateway and the identifier of the second gateway, whether the second station is connected to the user equipment gateway.

With reference to the fourth possible implementation manner of the seventh aspect, in a sixth possible implementation manner of the seventh aspect, the sending unit is further configured to:
send a second message to a second station, where the second message includes the identifier of the first gateway, so that the second station returns an identifier of a second gateway, and the second gateway is a serving gateway connected to the second station;
the receiving unit is further configured to receive a second response message sent by the second station, where the second response message includes the identifier of the second gateway; and
the connection determining unit is further configured to:
   determine, according to the identifier of the user equipment gateway and the identifier of the second gateway, whether the second station is connected to the user equipment gateway.

With reference to the seventh aspect or the first possible implementation manner of the seventh aspect, in a seventh possible implementation manner of the seventh aspect, the sending unit is further configured to send a third message to a second station, where the third message includes the identifier of the user equipment gateway, so that the second station determines, according to the identifier of the user equipment gateway and an identifier of a second gateway, whether the second station is connected to the user equipment gateway.

With reference to the seventh possible implementation manner of the seventh aspect, in an eighth possible implementation manner of the seventh aspect, the receiving unit is further configured to:
receive a third response message sent by the second station, where the third response message is used to indicate whether the second station is connected to the user equipment gateway, or indicate agreeing to provide a service for the user equipment.

With reference to the eighth possible implementation manner of the seventh aspect, in a ninth possible implementation manner of the seventh aspect, the connection determining unit is further configured to determine, according to an indication of the third response message, whether the second station is connected to the user equipment gateway.

With reference to any one of the fourth to the ninth possible implementation manners of the seventh aspect, in a tenth possible implementation manner of the seventh aspect, the sending unit is further specifically configured to:
if it is determined that the second station is connected to the user equipment gateway, send a fourth message to the second station, where the fourth message is used to request the second station to provide a service for the user equipment, and the first station is a serving station of the user equipment.

With reference to any one of the fourth to the ninth possible implementation manners of the seventh aspect, in an eleventh possible implementation manner of the seventh aspect,
the identifier of the first gateway or the second gateway includes any one of or a combination of more than one of an SGW ID, an SGW ID index, an SGW name, a PGW ID, a PGW ID index, and a PGW name.

With reference to any one of the fifth to the seventh possible implementation manners of the seventh aspect, in a twelfth possible implementation manner of the seventh aspect,
the identifier of the first gateway or the second gateway includes any one of or a combination of more than one of an SGW ID, an SGW ID index, an SGW name, a PGW ID, a PGW ID index, and a PGW name.

An eighth aspect of the embodiments of the present invention provides an information management entity, including:
a gateway determining unit, configured to determine a user equipment gateway, where the user equipment gateway is a serving gateway connected to a first station and provides a service for user equipment; and
a connection information sending unit, configured to send an identifier of the user equipment gateway to the first station, so that the first station determines, according to the identifier of the user equipment gateway, a station connected to the user equipment gateway.

In a first possible implementation manner of the eighth aspect, the information management entity further includes:
a connection information receiving unit, configured to receive a first message sent by the first station, where the first message includes an IP address of the user equipment gateway and/or an identifier of the user equipment; or before the user equipment gateway is determined, further including: acquiring an identifier of the first station.

In a second possible implementation manner of the eighth aspect, the first message includes an S1 user equipment context setup request message or a bearer setup request message.

In a third possible implementation manner of the eighth aspect, the gateway determining unit is specifically configured to determine the user equipment gateway according to an identifier of the user equipment.

With reference to the first possible implementation manner of the eighth aspect, in a fourth possible implementation manner of the eighth aspect, the gateway determining unit is further specifically configured to:
create a fully qualified domain name of the first station according to the identifier of the first station, and perform a query on a DNS server according to the fully qualified domain name, to determine a serving gateway connected to the first station; or
determine, according to the identifier of the first station and a serving gateway list stored in the information management entity, a serving gateway connected to the first station, where the serving gateway list is a list of a correspondence between an identifier of a second station and a serving gateway; and
the connection information sending unit is further configured to send an identifier of a first gateway to the first station, or send an identifier of a station connected to the first gateway.

A ninth aspect of the embodiments of the present invention provides a station, including:
an input apparatus, an output apparatus, a memory, and a processor; where the input apparatus performs the following step:
   receiving a first message sent by an information management entity, where the first message includes information about a connection relationship between a second station and a serving gateway; and
   the processor performs the following step:
      determining, according to the first message, whether the second station is connected to a user equipment gateway, where the user equipment gateway is a serving gateway connected to a first station and provides a service for user equipment.

A tenth aspect of the embodiments of the present invention provides an information management entity, including:
an input apparatus, an output apparatus, a memory, and a processor; where the processor performs the following step:
   determining information about a connection relationship between a second station and a serving gateway; and
   the output apparatus performs the following step:
      sending a first message to a first station, so that the first station determines, according to the first message, whether the second station is connected to a user equipment gateway, where the first message includes the information about the connection relationship between the second station and the serving gateway, and the user equipment gateway is a serving gateway connected to the first station and provides a service for user equipment.

An eleventh aspect of the embodiments of the present invention provides a station, including:
an input apparatus, an output apparatus, a memory, and a processor; where the input apparatus performs the following step:
   receiving an identifier that is of a user equipment gateway and sent by an information management entity, where the user equipment gateway is a serving gateway connected to a first station and provides a service for user equipment; and
   the processor performs the following step:
      determining, according to the identifier of the user equipment gateway, a station connected to the user equipment gateway.

A twelfth aspect of the embodiments of the present invention provides a station, including:
an input apparatus, an output apparatus, a memory, and a processor; where
the processor performs the following step:
   determining a user equipment gateway, where the user equipment gateway is a serving gateway connected to a first station and provides a service for user equipment; and
   the output apparatus performs the following step:
      sending an identifier of the user equipment gateway to the first station, so that the first station determines, according to the identifier of the user equipment gateway, a station connected to the user equipment gateway.

It can be seen from the foregoing technical solutions that the embodiments of the present invention have the following advantages:
In the embodiments of the present invention, a first station receives a first message sent by an information management entity, where the first message includes information about a connection relationship between a second station and a serving gateway, so that the first station can determine, according to the first message, whether the second station is connected to a user equipment gateway, where the user equipment gateway is a serving gateway connected to the first station and provides a service for user equipment, and further, the first station can determine, according to a connection relationship between the second station and the user equipment gateway, whether the second station is suitable to provide a service for the user equipment, which provides a realizable condition for a station to actively look for a joint serving station for the user equipment.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of an information determining method according to an embodiment of the present invention;
FIG. 2 is another schematic flowchart of an information determining method according to an embodiment of the present invention;
FIG. 3 is another schematic flowchart of an information determining method according to an embodiment of the present invention;
FIG. 4 is another schematic flowchart of an information determining method according to an embodiment of the present invention;
FIG. 5 is another schematic flowchart of an information determining method according to an embodiment of the present invention;
FIG. 6 is another schematic flowchart of an information determining method according to an embodiment of the present invention;
FIG. 7 is another schematic flowchart of an information determining method according to an embodiment of the present invention;
FIG. 7A is another schematic flowchart of an information determining method according to an embodiment of the present invention;
FIG. 8 is another schematic flowchart of an information determining method according to an embodiment of the present invention;
FIG. 9 is another schematic flowchart of an information determining method according to an embodiment of the present invention;
FIG. 10 is another schematic flowchart of an information determining method according to an embodiment of the present invention;
FIG. 11 is a schematic diagram of a logical structure of a station according to an embodiment of the present invention;
FIG. 12 is a schematic diagram of a logical structure of an information management entity according to an embodiment of the present invention;
FIG. 13 is another schematic diagram of a logical structure of a station according to an embodiment of the present invention;
FIG. 14 is another schematic diagram of a logical structure of an information management entity according to an embodiment of the present invention; and
FIG. 15 is a schematic structural diagram of a station and an information management entity according to an embodiment of the present invention.

### DESCRIPTION OF EMBODIMENTS

The following clearly describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

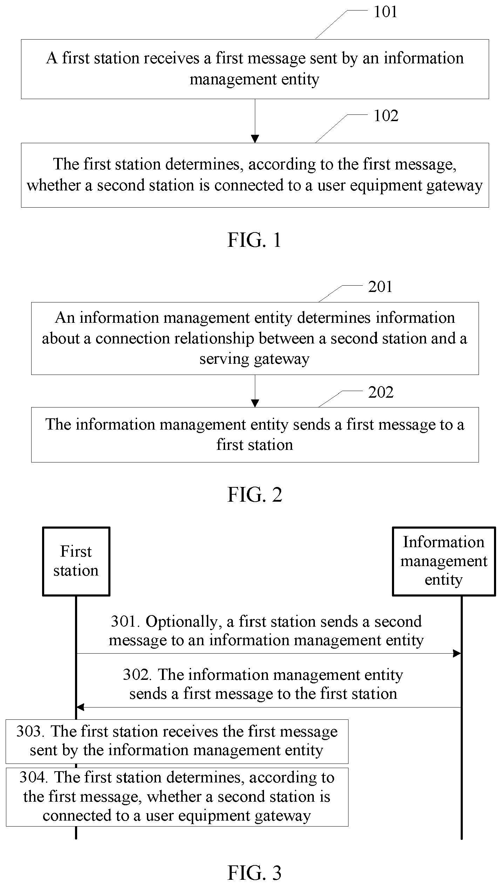

Referring to FIG. 1, on a side of a first station, an embodiment of an information determining method according to an embodiment of the present invention includes the following steps:
101. A first station receives a first message sent by an information management entity.

The first station receives the first message sent by the information management entity, where the first message includes information about a connection relationship between a second station and a serving gateway, the serving gateway includes a user equipment gateway, and the user equipment gateway is a serving gateway connected to the first station and provides a service for user equipment.

Optionally, the serving gateway may also be a first gateway or a second gateway, where the first gateway is a serving gateway connected to the first station, and the second gateway is a serving gateway connected to the second station.

The first station and the second station may be any station of a Macro eNB, an RRH, Pico eNB, Mico eNB, an HeNB, an RN (relay node), and a wireless local area network access point.

The user equipment refers to user equipment served by the first station or the second station. Optionally, in an actual application, if the first station actively requests the second station to serve the user equipment, the first station is a serving station of the user equipment (that is, the serving station of the user equipment is a station that provides a service for the user equipment, the serving station may be called a serving node, and specifically, a cell that is of the first station and provides a service for the user equipment is called a serving cell (serving cell)), and the second station is a potential serving station of the user equipment (that is, the second station is a station that has not yet provided a service for the user equipment, but may serve the user equipment in future). If the first station is requested by the second station to serve the user equipment, the second station is a serving station of the user equipment.

Optionally, the information management entity may be a mobility management entity (MME, Mobility Management Entity), or may be an operation, administration and maintenance (OAM, Operation Administration and Maintenance) entity. It may be understood that in an actual application, the information management entity may also be another network side device that stores or can acquire serving gateway information of a station, which is not specifically limited herein.

Optionally, the information management entity may actively send the first message to the first station, or may send the first message to the first station after receiving a request message sent by the first station, to respond to the request message.

Optionally, the information about the connection relationship between the second station and the serving gateway may be represented in multiple manners, such as an identifier of the serving gateway connected to the second station, information indicating whether the second station is connected to the user equipment gateway, an identifier of a second station connected to the user equipment gateway, or an identifier of a second station not connected to the user equipment gateway. It may be understood that in an actual application, the information about the connection relationship between the second station and the serving gateway may also have another representation form, which is not specifically limited herein.

102. The first station determines, according to the first message, whether a second station is connected to a user equipment gateway.

Because the first message carries the information about the connection relationship between the second station and the serving gateway, the first station may determine, according to the first message, whether the second station is connected to the user equipment gateway.

In an actual application, because data of user equipment is obtained from a serving gateway that provides a service for the user equipment, if at least two stations are required to serve same user equipment, it is required to first determine whether these joint serving stations are connected to the serving gateway that serves the user equipment. Therefore, in this embodiment of the present invention, a first station receives a first message sent by an information management entity, where the first message includes information about a connection relationship between a second station and a serving gateway, so that the first station can determine, according to the first message, whether the second station is connected to a user equipment gateway, where the user equipment gateway is a serving gateway connected to the first station and provides a service for the user equipment, and further, the first station can determine, according to a connection relationship between the second station and the user equipment gateway, whether the second station is suitable to provide a service for the user equipment, which provides a realizable condition for a station to actively look for a joint serving station for the user equipment.

Referring to FIG. 2, on a side of an information management entity, another embodiment of an information determining method according to an embodiment of the present invention includes the following steps:
201. An information management entity determines information about a connection relationship between a second station and a serving gateway.

The information management entity determines the information about the connection relationship between the second station and the serving gateway, the serving gateway includes a user equipment gateway, and the user equipment gateway is a serving gateway connected to a first station and provides a service for user equipment.

The first station and the second station may be any station of a Macro eNB, an RRH, Pico eNB, Mico eNB, an HeNB, an RN (relay node), and a wireless local area network access point.

The user equipment refers to user equipment served by the first station or the second station. Optionally, in an actual application, if the first station actively requests the second station to serve the user equipment, the first station is a serving station of the user equipment (that is, the serving station of the user equipment is a station that provides a service for the user equipment, the serving station may be called a serving node, and specifically, a cell that is of the first station and provides a service for the user equipment is called a serving cell (serving cell)); or if the first station is requested by the second station to serve the user equipment, the second station is a serving station of the user equipment.

Optionally, the information management entity may be an MME, or may be an OAM. It may be understood that in an actual application, the information management entity may also be another network side device that stores serving gateway information of a station, which is not specifically limited herein.

Optionally, the information about the connection relationship between the second station and the serving gateway may be represented in multiple manners, such as an identifier of the serving gateway connected to the second station, information indicating whether the second station is connected to the user equipment gateway, an identifier of a second station connected to the user equipment gateway, or an identifier of a second station not connected to the user equipment gateway. It may be understood that in an actual application, the information about the connection relationship between the second station and the serving gateway may also have another representation form, which is not specifically limited herein.

Optionally, the information management entity may create a fully qualified domain name (FQDN, Fully Qualified Domain Name) of the second station according to an identifier of the second station, and perform a query in a domain name system (DNS, Domain Name System) according to the fully qualified domain name, to determine a serving gateway connected to the second station; or
determine, according to an identifier of the second station and a serving gateway list stored in the information management entity, a serving gateway connected to the second station, where the serving gateway list is a list of a correspondence between the identifier of the second station and the serving gateway. In an actual application, the information management entity may store a list of the serving gateway list in a query requested by another station or in an application of another service, and the information management entity may directly locally acquire the information about the connection relationship between the second station and the serving gateway, without a need to perform a query in the DNS again.

202. The information management entity sends a first message to a first station.

The information management entity sends the first message to the first station, where the first message includes the information about the connection relationship between the second station and the serving gateway, so that the first station determines, according to the information about the connection relationship between the second station and the serving gateway, whether the second station is connected to the user equipment gateway.

In an actual application, the information determining method in this embodiment of the present invention may be implemented in multiple manners. For description, the following uses an example in which a first station requests an information management entity for dual-connection setup. Referring to FIG. 3, an embodiment of an information determining method according to an embodiment of the present invention includes the following steps:
301. Optionally, a first station sends a second message to a information management entity.

The first station sends the second message to the information management entity, where the second message includes an identifier of a second station, or an identifier of the first station and the identifier of the second station.

Optionally, the second message may be used to request information about a connection relationship between the second station and a serving gateway, for example, the second message may be a dual-connection setup request message; the second station is one or more potential stations that may provide a service for user equipment.

Optionally, the identifier of the first station and the identifier of the second station may be any one of or a combination of more than two of a tracking area identity (TAI, Tracking area identity) of a station, a station identifier (eNB ID, eNB), and a cell global identifier (ECGI, E-UTRAN Cell Global Identifier); the identifier of the first station and the identifier of the second station are respectively used to uniquely determine the first station and the second station. It may be understood that in an actual application, the identifier of the first station or the second station may also be represented by using another method, which is not specifically limited herein.

Specifically, in this embodiment of the present invention, when the first station requires the information management entity to return information indicating whether the second station is connected to a user equipment gateway, in a case in which the information management entity needs to determine whether the second station is connected to the user equipment gateway, the information management entity needs to learn the following two pieces of information:
(1) an identifier of the user equipment and/or an IP address of the user equipment gateway; and
(2) the identifier of the second station, or the identifier of the first station and the identifier of the second station.

In this embodiment of the present invention, the second message may carry both of the foregoing two pieces of information (1) and (2), or carry only the information (2), and then acquire the information (1) by using another message or in another manner, where there is no strict time sequence for the information management entity to acquire the two pieces of information (1) and (2).

The identifier of the user equipment may be one or more of an MME UE S1AP ID, an eNB UE S1AP ID, an IMSI, and a GUMMEI. The eNB UE S1AP ID is used to uniquely identify a terminal on an S 1 interface within an eNB (The eNB UE S1AP ID uniquely identify the UE association over the S1 interface within the eNB); the MME UE S1AP ID is used to uniquely identify a terminal on an S1 interface within an MME (The MME UE S1AP ID uniquely identify the UE association over the S1 interface within the MME); an international mobile subscriber identity (IMSI: International Mobile SubscriberIdentification Number (GUMMEI, Globally Unique Mobility Management Entity Identifier globally unique mobility management entity identifier) (IMEI, International Mobile Equipment Identity) are used to identify user equipment..

It may be understood that in an actual application, the identifier of the user equipment may also be represented by using another method, which is not specifically limited herein.

302. The information management entity sends a first message to the first station.

The information management entity sends the first message to the first station, where the message includes the information about the connection relationship between the second station and the serving gateway, and the information about the connection relationship between the second station and the serving gateway may be specifically the information indicating whether the second station is connected to the user equipment gateway. The user equipment gateway is a serving gateway connected to the first station and provides a service for the user equipment.

Specifically, after receiving the second message sent by the first station, the information management entity determines, according to the identifier that is of the second station and included in the second message, the information about the connection relationship between the second station and the serving gateway.

Specifically, the information management entity may create a fully qualified domain name of the second station according to the identifier of the second station, and perform a query in a domain name system DNS according to the fully qualified domain name, to determine a serving gateway connected to the second station; or determine, according to the identifier of the second station and a serving gateway list stored in the information management entity, a serving gateway connected to the second station, where the serving gateway list is a list of a correspondence between the identifier of the second station and the serving gateway. In an actual application, the information management entity may store a list of the serving gateway list in a query requested by another station or in an application of another service, and the information management entity may directly locally acquire the information about the connection relationship between the second station and the serving gateway, without a need to perform a query in the DNS again. In this embodiment of the present invention, how the information management entity determines the user equipment gateway is not limited to the two manners provided in this embodiment of the present invention, which is not specifically limited herein.

In an actual application, after receiving the second message, the information management entity may first confirm whether a requested station (that is, the second station in this embodiment of the present invention) and a requesting station (that is, the first station in this embodiment of the present invention) are connected to a same serving gateway, and then send the first message to the first station, where the first message carries the information about the connection relationship between the second station and the serving gateway.

303. The first station receives the first message sent by the information management entity.

The first station receives the first message sent by the information management entity, where the first message includes the information about the connection relationship between the second station and the serving gateway, the serving gateway includes the user equipment gateway, and the user equipment gateway is a serving gateway connected to the first station and provides a service for the user equipment.

In this embodiment of the present invention, the first message is a response message of the second message, and may be specifically a dual-connection setup response message. Specifically, the dual-connection setup response message carries the information indicating whether the second station is connected to the user equipment gateway. It may be understood that in another scenario, the first message may also be a message of another type, which is not specifically limited herein.

Optionally, the information management entity may actively send the first message to the first station, or may send the first message to the first station after receiving a request message sent by the first station, to respond to the request message.

304. The first station determines, according to the first message, whether a second station is connected to a user equipment gateway.

The first station determines, according to the information indicating whether the second station is connected to the user equipment gateway, whether the second station is connected to the user equipment gateway.

Optionally, in this embodiment of the present invention, the user equipment may be that the first station is a current serving station of the user equipment, or may be that the second station is a current serving station of the user equipment.

The first station and the second station may be any station of a Macro eNB, an RRH, Pico eNB, Mico eNB, an HeNB, an RN (relay node), and a wireless local area network access point.

Optionally, the information management entity may be a mobility management entity (MME, Mobility Management Entity), or may be an operation, administration and maintenance (OAM, Operation Administration and Maintenance) entity. It may be understood that in an actual application, the information management entity may also be another network side device that stores serving gateway information of a station, which is not specifically limited herein.

The user equipment refers to user equipment served by the first station or the second station. Optionally, in an actual application, if the first station actively requests the second station to serve the user equipment, the first station is a current serving station of the user equipment (that is, a station that provides a service for the user equipment); or if the first station is requested by the second station to serve the user equipment, the second station is a current serving station of the user equipment.

If the first station is a current serving station of the user equipment, after determining that the second station is connected to the user equipment gateway, the first station sends a sixth message to the second station, where the sixth message is used to request the second station to provide a service for the user equipment. The sixth message may be a handover request message, or an add secondary cell (add Scell) request message, and a specific type of the message is not limited herein. In the present invention, the requesting the second station to provide a service for the user equipment may be requesting one or more cells of the second station to serve as a serving cell of the user equipment. Details are not repeatedly described herein.

If the second station is a current serving station of the user equipment, before step 301, the first station receives a third message sent by the second station, where the third message is used to request the first station to provide a service for the user equipment. After it is determined whether the second station is connected to the user equipment gateway, if the second station is connected to the user equipment gateway, a fourth message is returned to the second station, where the fourth message is used to indicate agreeing to provide a service for the user equipment; if the second station is not connected to the user equipment gateway, a fifth message is returned to the second station, where the fifth message is used to indicate refusing to provide a service for the user equipment.

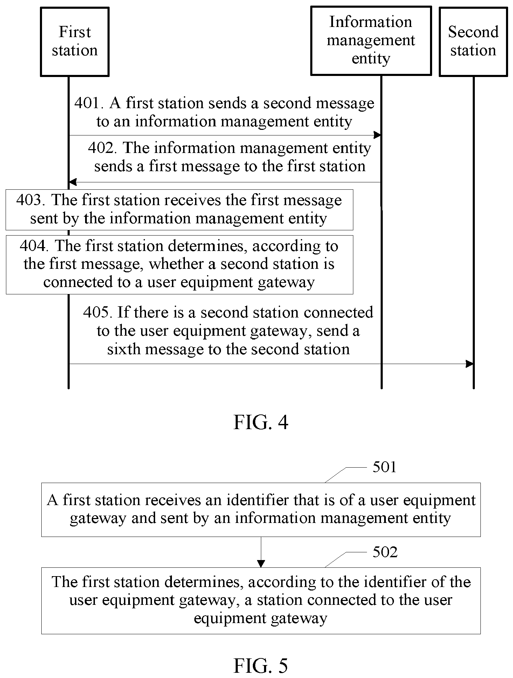

In an actual application, if the first station is a serving station of the user equipment, the first station may simultaneously perform a query on the information management entity to determine connection relationships between multiple second stations and a serving gateway, so that the first station selects a more suitable serving station for the user equipment. Referring to FIG. 4, another embodiment of an information determining method according to an embodiment of the present invention includes the following steps:
401. A first station sends a second message to an information management entity.

The first station sends the second message to the information management entity, where the second message includes an identifier of a second station, or an identifier of the first station and the identifier of the second station.

Optionally, the second message is used to request information about a connection relationship between the second station and a serving gateway, where the serving gateway includes a user equipment gateway and a second gateway, the user equipment gateway is a serving gateway connected to the first station and provides a service for user equipment, and the second gateway is a serving gateway connected to the second station.

The user equipment refers to user equipment served by the first station or the second station. Optionally, in an actual application, if the first station actively requests the second station to serve the user equipment, the first station is a current serving station of the user equipment (that is, a station that provides a service for the user equipment); or if the first station is requested by the second station to serve the user equipment, the second station is a current serving station of the user equipment.

Optionally, there may be multiple second stations. Further, the second station may be a neighboring station of the first station. The first station and the second station may be any station of a Macro eNB, an RRH, Pico eNB, Mico eNB, an HeNB, an RN (relay node), and a wireless local area network access point.

Specifically, in this embodiment of the present invention, if the information management entity needs to return information indicating whether the second station is connected to the user equipment gateway, the information management entity needs to learn the following two pieces of information:
(1) an identifier of the user equipment and/or an IP address of the user equipment gateway; and
(2) the identifier of the second station, or the identifier of the first station and the identifier of the second station.

If the information management entity needs to return an identifier of the second gateway, the information management entity needs to learn the identifier of the second station, or the identifier of the first station and the identifier of the second station in the foregoing (2).

If the information management entity needs to return an identifier of a second station connected to the user equipment gateway, or an identifier of a second station not connected to the user equipment gateway, the information management entity needs to learn the identifier of the user equipment and/or the IP address of the user equipment gateway in the foregoing (1).

In this embodiment of the present invention, the second message may carry both of the foregoing two pieces of information (1) and (2), or carry only one piece of information (2) and (1), and then acquire the other piece of information by using another message or in another manner, where there is no strict time sequence for the information management entity to acquire the two pieces of information (1) and (2).

402. The information management entity sends a first message to the first station.

In this embodiment of the present invention, after the information management entity receives the second message, if the second message includes the identifier of the user equipment and/or the IP address of the user equipment gateway, or the second message is used to request information about all stations connected to the user equipment gateway, the information management entity determines the user equipment gateway by using the identifier of the user equipment and/or the IP address of the user equipment gateway, determines a station connected to the user equipment gateway (which may be all the stations connected to the user equipment gateway, may be some of the stations, or may be one or more stations), and then sends, to the first station, the first message that carries "an identifier of a second station connected to the user equipment gateway". In this case, the information about the connection relationship between the second station and the serving gateway is the identifier of the second station connected to the user equipment gateway.

If the second message is used to request to query connection relationships between at least one(one or more) second station and the user equipment gateway, the information management entity needs to acquire the identifier of the first station and the identifier of the second station, and determine the user equipment gateway and the second gateway according to the identifier of the first station and the identifier of the second station respectively. If a second gateway corresponding to any second station includes the user equipment gateway, the second station is connected to the user equipment gateway; after determining the connection relationships between the several second stations and the user equipment gateway, the information management entity sends, to the first station, the first message that carries "an identifier of a second station connected to the user equipment gateway, or an identifier of a second station not connected to the user equipment gateway". There may also be many methods for determining whether the second station is connected to the user equipment gateway. For example, after determining the user equipment gateway, the information management entity obtains information about a station connected to the user equipment gateway, and then determines, by means of comparison, whether the second station is a station connected to the second gateway; and the connection relationship between the second station and the serving gateway is fed back after the determining. In this case, the information about the connection relationship between the second station and the serving gateway is the first message that carries "an identifier of a second station connected to the user equipment gateway or an identifier of a second station not connected to the user equipment gateway".

If the second message is used to request to query several second gateways of the second station, the information management entity needs to acquire the identifier of the second station, determine the second gateway according to the identifier of the second station, and then send, to the first station, the first message that carries "an identifier of the second gateway". In this case, the information about the connection relationship between the second station and the serving gateway is the identifier of the second gateway, and the identifier of the second gateway includes any one of or a combination of more than two of an SGW ID, an SGW ID index, and an SGW name.

Specifically, a method for determining the second gateway by the information management entity may be: creating a fully qualified domain name of the second station according to the identifier of the second station, and performing a query in a domain name system DNS according to the fully qualified domain name, to determine a serving gateway connected to the second station; or determining, according to the identifier of the second station and a serving gateway list stored in the information management entity, a serving gateway connected to the second station, where the serving gateway list is a list of a correspondence between the identifier of the second station and the serving gateway. In an actual application, the information management entity may store a list of the serving gateway list in a query requested by another station or in an application of another service, and the information management entity may directly locally acquire the information about the connection relationship between the second station and the serving gateway, without a need to perform a query in the DNS again.

The foregoing description about how to determine the connection relationship between the second station and the serving gateway is merely exemplary. It may be understood that in an actual application, there may be another implementation manner, which is not specifically limited herein.

403. The first station receives the first message sent by the information management entity.

The first station receives the first message sent by the information management entity. In this embodiment of the present invention, the first message may be a response message of the second message. The first message includes the information about the connection relationship between the second station and the serving gateway.

404. The first station determines, according to the first message, whether a second station is connected to a user equipment gateway.

Optionally, if the information about the connection relationship between the second station and the serving gateway is the identifier of the second gateway, the first station acquires the identifier of the user equipment gateway, and then determines, by means of comparison, whether one of identifiers of the second gateways is the same as the identifier of the user equipment gateway; and if one of the identifiers of the second gateways is the same as the identifier of the user equipment gateway, it is determined that the second station is connected to the user equipment gateway; or if none of the identifiers of the second gateways is the same as the identifier of the user equipment gateway, it is determined that the second station is not connected to the user equipment gateway.

Optionally, if the information about the connection relationship between the second station and the serving gateway is the identifier of the second station connected to the user equipment gateway, it is determined that the second station corresponding to the identifier that is of the second station and carried in the first message is connected to the user equipment gateway; or if the information about the connection relationship between the second station and the serving gateway is the identifier of the second station not connected to the user equipment gateway, the identifier that is of the second station and carried in the first message is compared with the identifier that is of the second station and carried in the second message, to determine the second station connected to the user equipment gateway.

405. If there is a second station connected to the user equipment gateway, send a sixth message to the second station.

If there is the second station connected to the user equipment gateway, the sixth message is sent to the second station, where the sixth message is used to request the second station to provide a service for the user equipment, and the first station is a serving station of the user equipment. Optionally, any station sends the sixth message only after it is determined that the second station is connected to the user equipment gateway.

Optionally, the sixth message may carry the indication information used to confirm that the second station is connected to the user equipment gateway, so that the second station does not need to perform a query on the information management entity again to confirm a connection relationship between the second station and the user equipment gateway.

Referring to FIG. 5, on a side of a first station, another embodiment of an information determining method according to an embodiment of the present invention includes the following steps:
501. A first station receives an identifier that is of a user equipment gateway and sent by an information management entity.

The first station receives the identifier that is of the user equipment gateway and sent by the information management entity, where the user equipment gateway is a serving gateway connected to the first station and provides a service for user equipment.

Optionally, the identifier of the user equipment gateway includes any one of or a combination of more than two of an SGW ID, an SGW ID index, and an SGW name.

The first station may be any station of a Macro cell, an RRH, a Pico eNB, an HeNB, an RN, and a wireless local area network access point.

Optionally, the information management entity may be a mobility management entity (MME, Mobility Management Entity), or may be an operation, administration and maintenance (OAM, Operation Administration and Maintenance) entity. It may be understood that in an actual application, the information management entity may also be another network side device that stores serving gateway information of a station, which is not specifically limited herein.

Optionally, the information management entity may actively send the identifier of the user equipment gateway to the first station, or may send the identifier of the user equipment gateway to the first station after receiving a request message that is of the identifier of the user equipment gateway and sent by the first station.

502. The first station determines, according to the identifier of the user equipment gateway, a station connected to the user equipment gateway.

Optionally, the first station may directly determine, by using information provided by the information management entity, the station connected to the user equipment gateway; or may interact with the second station according to information provided by the information management entity, to determine the station connected to the user equipment gateway, which is not specifically limited herein.

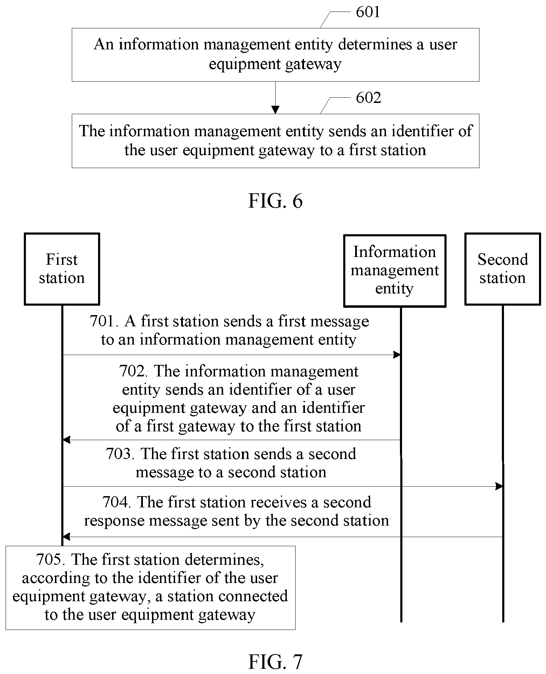

Referring to FIG. 6, on a side of an information management entity, another embodiment of an information determining method according to an embodiment of the present invention includes the following steps:
601. An information management entity determines a user equipment gateway.

The information management entity determines the user equipment gateway, where the user equipment gateway is a serving gateway connected to a first station and provides a service for user equipment.

Optionally, an identifier of the user equipment gateway includes any one of or a combination of more than two of an SGW ID, an SGW ID index, and an SGW name.

602. The information management entity sends an identifier of the user equipment gateway to a first station.

The information management entity sends the identifier of the user equipment gateway to the first station, so that the first station determines, according to the identifier of the user equipment gateway, a station connected to the user equipment gateway.

Optionally, in an actual application, the information management entity may actively provide the identifier of the user equipment gateway for the first station, or to respond to a request of the first station, provide the identifier of the user equipment gateway for the first station, which is not specifically limited herein.

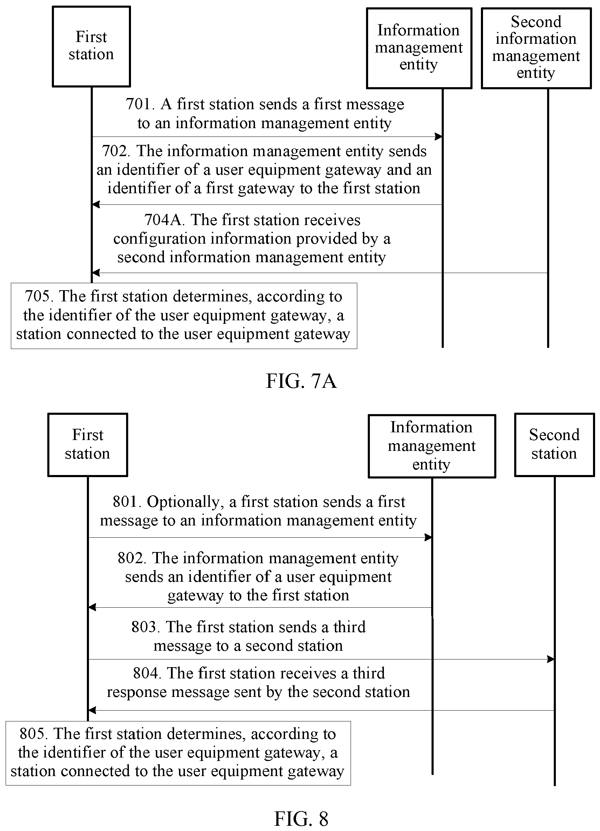

In an actual application, the first station may also request the identifier of the user equipment gateway and an identifier of a first gateway from the information management entity, so that the first station can interact with a second station for an identifier of a serving gateway connected to the peer station, to determine whether the peer station is connected to a same serving gateway to which the own station is connected. Specifically, referring to FIG. 7, another embodiment of an information determining method according to an embodiment of the present invention includes the following steps:

Optionally, 701. A first station sends a first message to an information management entity.

The first station sends the first message to the information management entity, where the first message includes an IP address of a user equipment gateway and/or an identifier of user equipment.

The first message may be used to request an identifier of the user equipment gateway, where the user equipment gateway is a serving gateway connected to the first station and provides a service for the user equipment, and the first message may be used to request the identifier of the user equipment gateway according to the identifier of the user equipment. In an actual application, the first message may be: an S1 user equipment context setup request message or a bearer setup request message. It may be understood that in an actual application, the first message may also be another application message that carries the identifier of the user equipment and an identifier of the first station, which is not specifically limited herein.

Optionally, the first message may be used to request an identifier of a first gateway, where the first gateway is a serving gateway connected to the first station, and the first message may be used to request the identifier of the user equipment gateway according to the identifier of the first station.

Optionally, the first message may also be used to request the identifier of the user equipment gateway and the identifier of the first gateway, and the first message may be used to request the identifier of the user equipment gateway according to the identifier of the user equipment and the identifier of the first station.

It may be understood that in an actual application, the first station may also request the identifier of the first gateway by using a separate message, or the information management entity actively sends the identifier of the first gateway to the first station, or the first station acquires the identifier of the first gateway from a local query history. A specific implementation manner is not limited herein.

702. The information management entity sends an identifier of a user equipment gateway and an identifier of a first gateway to the first station.

Optionally, the information management entity may send the identifier of the user equipment gateway to the first station after receiving the first message, or may actively send the identifier of the user equipment gateway to the first station.

Specifically, an identifier of a gateway may be any one of or a combination of more than two of a serving gateway (SGW, serving Gateway) ID, an SGW ID index, an SGW name, a packet gateway (PGW, Packet Gateway) ID, a PGW ID index, and a PGW name.

Specifically, before the information management entity determines the user equipment gateway, the information management entity needs to acquire the identifier of the user equipment and/or the IP address of the user equipment gateway. Optionally, the identifier of the user equipment and/or the IP address of the user equipment gateway may be carried in the first message, or may be acquired by the information management entity in another manner, which is not specifically limited herein.

In an actual application, as long as the information management entity learns the identifier of the user equipment and/or the IP address of the user equipment gateway, the information management entity may query, for the first station, the identifier of the user equipment gateway. For example, because the user equipment gateway is selected by the information management entity (for example, an MME) for the user equipment, as long as the information management entity learns the identifier of the user equipment and/or the IP address of the user equipment gateway, the information management entity may query, for the first station, the identifier of the user equipment gateway. Specifically, the user equipment gateway may be a serving gateway selected by the information management entity for the user equipment when the user equipment is connected to a network, and therefore the information management entity learns information about a gateway that provides a service for the user equipment. In this case, after the user equipment gateway is selected for the user equipment, the information management entity may provide the identifier of the user equipment gateway for the first station at any time.

Further, the information management entity may further send the identifier of the first gateway to the first station; before determining the first gateway, the information management entity needs to acquire the identifier of the first station. Optionally, the identifier of the first station may be sent to the information management entity by using the first message, and the information management entity may also acquire the identifier of the first station in another manner, which is not specifically limited herein.

After receiving the identifier of the first station, the information management entity determines the first gateway according to the first message and the identifier of the first station. The first gateway may be determined in the following manner: Specifically, the information management entity may create a fully qualified domain name of the first station according to the identifier of the first station, and perform a query in a DNS according to the fully qualified domain name, to determine a serving gateway connected to the first station; or determine, according to the identifier of the first station and a serving gateway list stored in the information management entity, a serving gateway connected to the first station, where the serving gateway list is a list of a correspondence between the identifier of the first station and the serving gateway. In an actual application, the information management entity may store a list of the serving gateway list in a query requested by another station or in an application of another service, and the information management entity may directly locally acquire information about a connection relationship between the first station and the serving gateway, without a need to perform a query in the DNS again. In this embodiment of the present invention, how the information management entity determines the first gateway is not limited to the two manners provided in this embodiment of the present invention, which is not specifically limited herein.

Optionally, the information management entity may send the identifier of the first gateway to the first station, where the identifier of the first gateway may be sent together with the identifier of the user equipment gateway to the first station by using one message, or may be sent to the first station by using a different message, which is not specifically limited herein.

It may be understood that step 702 may be performed without step 701. That is, the information management entity may send the identifier of the user equipment gateway to the first station at any time, that is, may send the identifier of the user equipment gateway without a request from the first station.

703. The first station sends a second message to a second station.

Optionally, after receiving the identifier of the user equipment gateway and the identifier of the first gateway, the first station may send the second message to the second station, and the second message includes the identifier of the first gateway, so that the second station returns an identifier of a second gateway, where the second gateway is a serving gateway connected to the second station.

Exemplarily, the second message may be an X2 interface setup request message. It may be understood that in an actual application, the second message may also be another message that carries information about a connection relationship between a station and a serving gateway, which is not specifically limited herein.

704. The first station receives a second response message sent by the second station.

Optionally, the first station receives the second response message sent by the second station, where the second response message includes the identifier of the second gateway. Exemplarily, the second response message may be an X2 interface setup response message. Optionally, the second response message includes the identifier of the second gateway and/or an identifier of the second station. Alternatively, the first station receives configuration information provided by a second information management entity, where the configuration information includes an identifier of the second gateway and/or an identifier of the second station.

Optionally, in this embodiment of the present invention, because a station spontaneously queries, in the information management entity, an identifier of a serving gateway connected to the station, and interacts with each station for an identifier of a serving gateway connected to each station, the second response message is not necessarily a response message of the second message, and may also be a message actively sent by the second station to the first station. Therefore, there is no strict sequence between step 703 and step 704 in this embodiment of the present invention, step 703 is also not a mandatory step, and the first station may not send the second message to the second station after first receiving the second response message.

705. The first station determines, according to the identifier of the user equipment gateway, a station connected to the user equipment gateway.

Specifically, after acquiring the identifier of the second gateway, the first station may determine, according to the identifier of the user equipment gateway and the identifier of the second gateway, whether the second station is connected to the user equipment gateway. That is, the second gateways are searched to determine whether one of the second gateways is the user equipment gateway.

If it is determined that the second station is connected to the user equipment gateway, the first station sends a fourth message to the second station, where the fourth message is used to request the second station to provide a service for the user equipment, and the first station is a serving station of the user equipment.

Exemplarily, the fourth message may be specifically a handover response message, an add secondary cell message, or the like, which is not specifically limited.

In an actual application, the foregoing embodiment may also be that content of the foregoing step 701 and step 702 is performed, step 704A is then performed, and content of the foregoing step 705 is finally performed. Specifically, referring to FIG. 7A, step 704A is as follows:

704A. The first station receives configuration information provided by a second information management entity for the first station, where the configuration information includes an identifier of a second gateway, or the configuration information includes an identifier of the second station and the identifier of the second gateway.

The second gateway is a gateway connected to the second station, and the second station may be a neighboring station of the first station.

Specifically, the second information management entity provides the configuration information for the first station, and the configuration information specifically includes configuration information of the identifier of the second gateway (that is, an identifier of a gateway connected to the second station). For example, configuration information of the identifier of the second station and the identifier of the gateway connected to the second station may be shown in the following table:

| **Identifier of a second station** | **Identifier of a gateway connected to a second station** |
|---|---|
| SeNB1 ID | SGW1 ID index |
| | SGW2 ID index |
| SeNB2 ID | SGW1 ID index |
| | SGW3 ID index |
| | SGW4 ID index |
| SeNB3 ID | SGW1 ID index |
| | SGW2 ID index |
| | SGW5 ID index |

The first station is a current serving station of the UE or a master station of the UE. For example, the first station is a master ehanced NodeB (MeNB). The second station is a potential station that may provide a service for the UE. The first station and the second station may provide services for the UE, for example, a dual-connection terminal simultaneously accepts the services of the first station and the second station. The second station may be an SeNB1 (secondary eNB 1), an SeNB2, an SeNB3, or the like. Certainly, the second station may also be an eNB1, an eNB2, an eNB3, or the like. The present invention sets no limitation on a specific name of the second station herein.

The first station or the second station may be base stations of various forms, for example, stations such as a Macro eNB, an eNB RRH, Pico eNB, Mico eNB, an HeNB, an RN (relay node), and a wireless local area network access point. The present invention sets no limitation on a definition of the second station.

For the identifier of the second station, reference may be made to a definition in other embodiments of the present invention. For example, the identifier of the first station and the identifier of the second station may be any one of or a combination of more than two of a tracking area identity (TAI, Tracking area identity) of a station, a station identifier (eNB ID, eNB), and a cell global identifier (ECGI, E-UTRAN Cell Global Identifier).

For the identifier of the second gateway, reference may be made to any one of or a combination of more than one of an SGW ID, an SGW ID index, an SGW name, a PGW ID, a PGW ID index, and a PGW name that are defined in other embodiments of the present invention. Specifically, an identifier of an SGW is a canonical node name in an existing network, and an MME acquires the canonical node name of the SGW from the DNS, and may also obtain an address (for example, an IP address) of the SGW. Because the SGW may have multiple IP addresses, the canonical node name is an important identifier that can be used to identify the SGW However, because the canonical node name may reach a length of 256 bytes, for convenient transmission in a network, index numbering may be performed on the SGW canonical node name, as long as stations (for example, the first station, the second station, the information management entity, and the second information management entity) can identify the SGW to achieve an objective of distinguishing. Therefore, the SGW can be numbered, for example, an SGW ID index, where the SGW ID index only needs to be corresponding to an actual identifier of the SGW For example,

| **Gateway identifier** | **Identifier of a gateway connected to a second station** |
|---|---|
| SGW1: canonical node name 1 | SGW1 ID index |
| SGW2: canonical node name 2 | SGW1 ID index |
| SGW3: canonical node name 3 | SGW1 ID index |

An identifier of a PGW is also similar to that of the SGW.

The second information management entity may be an operation, administration and maintenance (OAM, Operation Administration and Maintenance) entity. Certainly, the second information management entity may also be a device such as a mobility management entity (MME, Mobility Management Entity). It may be understood that in an actual application, the information management entity may also be another network side device that stores serving gateway information of a station, which is not specifically limited herein. Specifically, in this embodiment, and in particular, for the embodiment that uses step 704A, the information management entity may be an MME, and the second information management entity may be an OAM.

In this embodiment of the present invention, a specific gateway identifier may be any one of or a combination of more than two of an SGW ID, an SGW ID index, an SGW name, a PGW ID, a PGW ID index, and a PGW name.

In an actual application, if the first station is a serving station of the user equipment, the first station may directly send the identifier of the user equipment gateway to the second station, and the second station determines whether the second station is connected to the user equipment gateway, and then returns related connection information to the first station. Specifically, referring to FIG. 8, another embodiment of an information determining method according to an embodiment of the present invention includes the following steps:
801. Optionally, a first station sends a first message to an information management entity.

The first station sends the first message to the information management entity, where the first message includes an IP address of a user equipment gateway and/or an identifier of user equipment.

The first message may be used to request an identifier of the user equipment gateway, where the user equipment gateway is a serving gateway connected to the first station and provides a service for the user equipment, and the first message may be used to request the identifier of the user equipment gateway according to the identifier of the user equipment. In an actual application, the first message may be: an S1 user equipment context setup request message or a bearer setup request message. It may be understood that in an actual application, the first message may also be another application message that carries the identifier of the user equipment and an identifier of the first station, which is not specifically limited herein.

802. The information management entity sends an identifier of a user equipment gateway to the first station.

Optionally, the information management entity may send the identifier of the user equipment gateway to the first station after receiving the first message, or may actively send the identifier of the user equipment gateway to the first station.

Specifically, an identifier of a gateway may be any one of or a combination of more than two of an SGW ID, an SGW ID index, an SGW name, a PGW ID, a PGW ID index, and a PGW name.

Specifically, before the information management entity determines the user equipment gateway, the information management entity needs to acquire the identifier of the user equipment and/or the IP address of the user equipment gateway. Optionally, the identifier of the user equipment and/or the IP address of the user equipment gateway may be carried in the first message, or may be acquired by the information management entity in another manner, which is not specifically limited herein.

In an actual application, as long as the information management entity learns the identifier of the user equipment and/or the IP address of the user equipment gateway, the information management entity may query, for the first station, the identifier of the user equipment gateway. For example, because the user equipment gateway is selected by the information management entity (for example, an MME) for the user equipment, as long as the information management entity learns the identifier of the user equipment and/or the IP address of the user equipment gateway, the information management entity may query, for the first station, the identifier of the user equipment gateway. Specifically, the user equipment gateway may be a serving gateway selected by the information management entity for the user equipment when the user equipment is connected to a network, and therefore the information management entity learns information about a gateway that provides a service for the user equipment. In this case, after the user equipment gateway is selected for the user equipment, the information management entity may provide the identifier of the user equipment gateway for the first station at any time.

It may be understood that step 802 may be performed without step 801. That is, the information management entity may send the identifier of the user equipment gateway to the first station at any time, that is, may send the identifier of the user equipment gateway without a request from the first station.

803. The first station sends a third message to a second station.

The first station sends the third message to the second station, where the third message includes the identifier of the user equipment gateway, so that the second station determines, according to the identifier of the user equipment gateway and an identifier of a second gateway, whether the second station is connected to the user equipment gateway.

Specifically, that the second station obtains the identifier of the second gateway may be implemented by using a method in which the first station obtains an identifier of a first gateway in Embodiment 7 or 8 of the present invention, and details are not repeatedly described herein.

804. The first station receives a third response message sent by the second station, where the third response message is used to indicate whether the second station is connected to the user equipment gateway, or indicate agreeing to provide a service for a user equipment.

805. The first station determines, according to the identifier of the user equipment gateway, a station connected to the user equipment gateway.

Specifically, after acquiring the third response message, the first station determines, according to an indication of the third response message, whether the second station is connected to the user equipment gateway.

If it is determined that the second station is connected to the user equipment gateway, the first station sends a fourth message to the second station, where the fourth message is used to request the second station to provide a service for the user equipment, and the first station is a serving station of the user equipment.

Exemplarily, the fourth message may be specifically a handover response message, an add secondary cell message, or the like, which is not specifically limited.

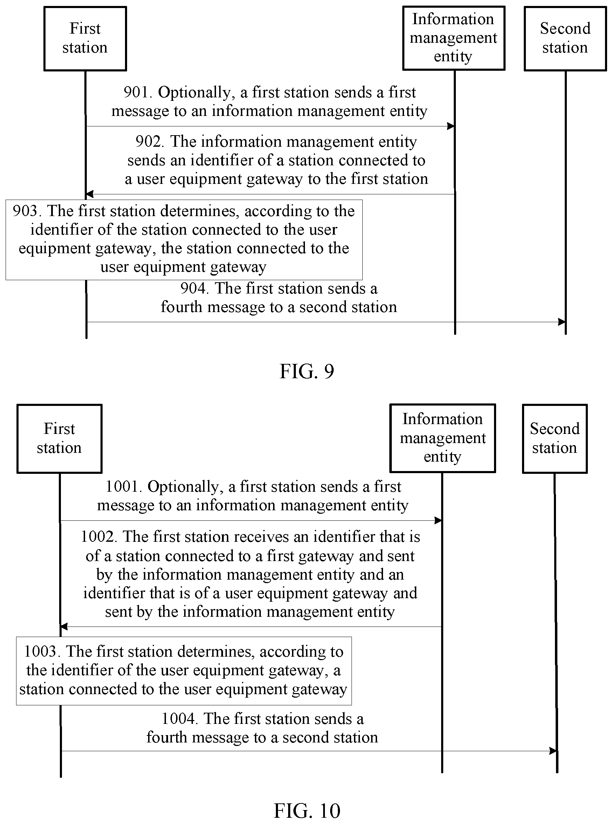

In an actual application, the information management entity may directly send, to the first station, information about a station connected to the user equipment gateway. Specifically, referring to FIG. 9, another embodiment of an information determining method according to an embodiment of the present invention includes the following steps:
901. Optionally, a first station sends a first message to an information management entity.

The first station sends the first message to the information management entity, where the first message includes an IP address of a user equipment gateway and/or an identifier of user equipment.

Optionally, the first message may be used to request an identifier of the user equipment gateway, where the user equipment gateway is a serving gateway connected to the first station and provides a service for the user equipment, and the first message may be used to request the identifier of the user equipment gateway according to the identifier of the user equipment. In an actual application, the first message may be: an S1 user equipment context setup request message or a bearer setup request message. It may be understood that in an actual application, the first message may also be another application message that carries the identifier of the user equipment and an identifier of the first station, which is not specifically limited herein.

Optionally, the first message may further be used to request an identifier of a station connected to the user equipment gateway. It may be understood that in an actual application, the first station may also request, by using a separate message, the identifier of the station connected to the user equipment gateway, or the information management entity actively sends the identifier of the station connected to the user equipment gateway to the first station. A specific implementation manner is not limited herein.

902. The information management entity sends an identifier of a station connected to a user equipment gateway to the first station.

Optionally, the information management entity may send the identifier of the user equipment gateway to the first station after receiving the first message, or may actively send the identifier of the user equipment gateway to the first station.

Specifically, an identifier of a gateway may be any one of or a combination of more than two of an SGW ID, an SGW ID index, an SGW name, a PGW ID, a PGW ID index, and a PGW name.

Specifically, before the information management entity determines the user equipment gateway, the information management entity needs to acquire the identifier of the user equipment and/or the IP address of the user equipment gateway. Optionally, the identifier of the user equipment and/or the IP address of the user equipment gateway may be carried in the first message, or may be acquired by the information management entity in another manner, which is not specifically limited herein.

In an actual application, because the user equipment gateway is selected by the information management entity for the user equipment, as long as the information management entity learns the identifier of the user equipment and/or the IP address of the user equipment gateway, the information management entity may query, for the first station, the identifier of the user equipment gateway. Specifically, the user equipment gateway may be a serving gateway selected by the information management entity for the user equipment when the user equipment is connected to a network, and therefore the information management entity learns information about a gateway that provides a service for the user equipment. In this case, after the user equipment gateway is selected for the user equipment, the information management entity may provide the identifier of the user equipment gateway for the first station at any time.

After determining the identifier of the user equipment gateway, the information management entity determines the identifier of the station connected to the user equipment gateway and sends, to the first station, the identifier of the station connected to the user equipment gateway, where the identifier of the station connected to the user equipment gateway may be sent together with the identifier of the user equipment gateway to the first station by using one message, or may be sent to the first station by using a different message, which is not specifically limited herein.

903. The first station determines, according to the identifier of the station connected to the user equipment gateway, the station connected to the user equipment gateway.

Before determining the station connected to the user equipment gateway, the first station further receives the identifier that is of the station connected to the user equipment gateway and sent by the information management entity.

Specifically, the first station may determine, according to the identifier of the station connected to the user equipment gateway, the station connected to the user equipment gateway.

Specifically, a gateway that provides a service for the user equipment may be known according to the identifier that is of the user equipment gateway and received by the first station.

904. The first station sends a fourth message to a second station.

In this embodiment of the present invention, the second station is a station connected to the user equipment gateway, and the first station sends the fourth message to the second station, where the fourth message is used to request the second station to provide a service for the user equipment.

In an actual application, the information management entity may directly send, to the first station, information about a station connected to a first gateway, so that the first station then does not need to subsequently query the station information in the information management entity. Specifically, referring to FIG. 10, another embodiment of an information determining method according to an embodiment of the present invention includes the following steps:
1001. Optionally, a first station sends a first message to an information management entity.

The first station sends the first message to the information management entity, where the first message includes an identifier of the first station. The first message may be used to request an identifier of a station connected to a first gateway, where the first gateway is a serving gateway connected to the first station.

The first station may further send the first message to the information management entity, where the first message includes an IP address of a user equipment gateway and/or an identifier of user equipment.

Optionally, the first message may be used to request an identifier of the user equipment gateway, where the user equipment gateway is a serving gateway connected to the first station and provides a service for the user equipment, and the first message may be used to request the identifier of the user equipment gateway according to the identifier of the user equipment. In an actual application, the first message may be: an S1 user equipment context setup request message or a bearer setup request message. It may be understood that in an actual application, the first message may also be another application message that carries the identifier of the user equipment and the identifier of the first station, which is not specifically limited herein.

Optionally, it may be understood that in an actual application, the first station may also request the identifier of the user equipment gateway by using a separate message, and change, by using a separate message, the identifier of the station connected to the first gateway. A specific implementation manner is not limited herein.

1002. The first station receives an identifier that is of a station connected to a first gateway and sent by the information management entity and an identifier that is of a user equipment gateway and sent by the information management entity.

Specifically, the information management entity may separately send the identifier of the station connected to the first gateway and the identifier of the user equipment gateway to the first station.

Optionally, the identifier of the station connected to the first gateway and the identifier of the user equipment gateway may be sent together by using a same message, or may be separately sent by using two messages, which is not specifically limited herein.

The information management entity determines, according to the identifier of the first station, all gateways connected to the first station, to further determine a station connected to each first gateway. Therefore, information about the station connected to the first gateway is sent to the first station.

The information management entity determines the user equipment gateway and sends information about the user equipment gateway to the first station.

1003. The first station determines, according to the identifier of the user equipment gateway, a station connected to the user equipment gateway.

Optionally, before determining the station connected to the user equipment gateway, the first station further receives the identifier that is of the station connected to the first gateway and sent by the information management entity.

Specifically, the first station may determine, according to the identifier of the station connected to the first gateway, the station connected to the user equipment gateway.

Specifically, a gateway that provides a service for the user equipment may be known according to the identifier that is of the user equipment gateway and received by the first station.

In an actual application, after step 1002 is performed, if the first station further needs to query an identifier of another user equipment gateway, the first station may directly query the identifier that is of the station connected to the first gateway and locally stored in the first station, without a need to perform a query on the information management entity again.

1004. The first station sends a fourth message to a second station.

In this embodiment of the present invention, the second station is a station connected to the user equipment gateway, and the first station sends the fourth message to the second station, where the fourth message is used to request the second station to provide a service for the user equipment.

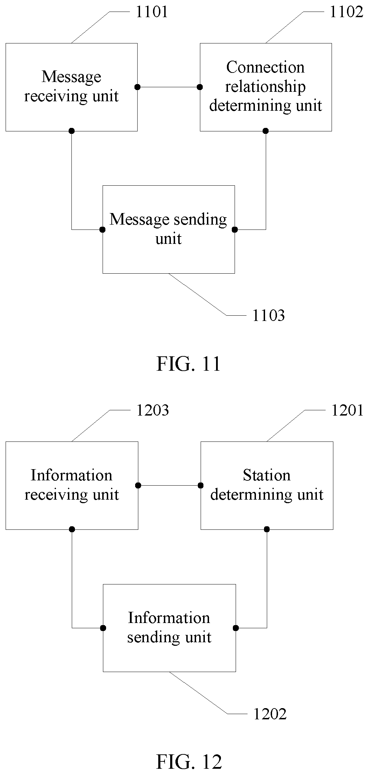

An embodiment of a station configured to perform the foregoing information determining method according to the present invention is described in the following. Reference may be made to FIG. 11 for a logical structure of the station. An embodiment of a station according to an embodiment of the present invention includes:
a message receiving unit 1101, configured to receive a first message sent by an information management entity, where the first message includes information about a connection relationship between a second station and a serving gateway; and
a connection relationship determining unit 1102, configured to determine, according to the first message, whether the second station is connected to a user equipment gateway, where the user equipment gateway is a serving gateway connected to a first station and provides a service for user equipment.

Optionally, the station may further include:
a message sending unit 1103, configured to send a second message to the information management entity, where the second message includes an identifier of the second station, an identifier of the first station, or the identifier of the first station and the identifier of the second station.

Optionally, the message sending unit 1103 is further configured to send an identifier of the user equipment and/or an IP address of the user equipment gateway to the information management entity.

Optionally, the serving gateway includes a first gateway or a second gateway, where the first gateway is a serving gateway connected to the first station, and the second gateway is a serving gateway connected to the second station; and accordingly, the information about the connection relationship between the second station and the serving gateway includes an identifier of the first gateway or an identifier of the second gateway.

Optionally, the information about the connection relationship between the second station and the serving gateway includes:
information indicating whether the second station is connected to the user equipment gateway; or
an identifier of a second station connected to the user equipment gateway; or
an identifier of a second station not connected to the user equipment gateway.

Optionally, the connection relationship determining unit 1102 is specifically configured to:
determine, according to the information indicating whether the second station is connected to the user equipment gateway, whether the second station is connected to the user equipment gateway; or
configured to determine, according to the identifier of the second station connected to the user equipment gateway or the identifier of the second station not connected to the user equipment gateway, whether the second station is connected to the user equipment gateway.

Optionally, the message receiving unit 1101 is further specifically configured to:
acquire an identifier of the user equipment gateway from the information management entity.

The connection relationship determining unit 1102 is further specifically configured to:
determine, according to the identifier of the user equipment gateway and the identifier of the second gateway, whether the second station is connected to the user equipment gateway.

Optionally, the message receiving unit 1101 is further configured to:
receive a third message sent by the second station, where the third message is used to request the first station to provide a service for the user equipment, and the second station is a serving station of the user equipment.

Optionally, the message sending unit is further configured to: if the second station is connected to the user equipment gateway, return a fourth message to the second station, where the fourth message is used to indicate agreeing to provide a service for the user equipment; or if the second station is not connected to the user equipment gateway, return a fifth message to the second station, where the fifth message is used to indicate refusing to provide a service for the user equipment.

Optionally, the message sending unit 1103 is further configured to:
if the second station is connected to the user equipment gateway, send a sixth message to the second station, where the sixth message is used to request the second station to provide a service for the user equipment, and the first station is a serving station of the user equipment.

Optionally, the identifier of the first station includes at least one of a tracking area identity TAI, a station identifier eNB ID, a station identifier index eNB ID index, and a cell global identifier ECGI;
the identifier of the second station includes at least one of a tracking area identity TAI, a station identifier eNB ID, a station identifier index eNB ID index, and a cell global identifier ECGI;
the identifier of the user equipment includes any one of or a combination of more than two of an international mobile subscriber identity IMSI, a globally unique mobility management entity identifier GUMMEI, an eNB UE S1AP ID, and an MME eNB UE S1AP ID; and
the identifier of the user equipment gateway, the first gateway, or the second gateway includes any one of or a combination of more than one of an SGW ID, an SGW ID index, an SGW name, a PGW ID, a PGW ID index, and a PGW name.

A specific interaction process of each unit in the station in this embodiment of the present invention includes:
the message receiving unit 1101 receives the first message sent by the information management entity, where the first message includes the information about the connection relationship between the second station and the serving gateway, the serving gateway includes the user equipment gateway, and the user equipment gateway is a serving gateway connected to the first station and provides a service for the user equipment.

Optionally, the serving gateway may also be the first gateway or the second gateway, where the first gateway is a serving gateway connected to the first station, and the second gateway is a serving gateway connected to the second station.

The user equipment refers to user equipment served by the first station or the second station. Optionally, in an actual application, if the first station actively requests the second station to serve the user equipment, the first station is a serving station of the user equipment (that is, the serving station of the user equipment is a station that provides a service for the user equipment, the serving station may be called a serving node, and specifically, a cell that is of the first station and provides a service for the user equipment is called a serving cell (serving cell)), and the second station is a potential serving station of the user equipment (that is, the second station is a station that has not yet provided a service for the user equipment, but may serve the user equipment in future). If the first station is requested by the second station to serve the user equipment, the second station is a serving station of the user equipment.

Optionally, the information management entity may be a mobility management entity (MME, Mobility Management Entity), or may be an operation, administration and maintenance (OAM, Operation Administration and Maintenance) entity. It may be understood that in an actual application, the information management entity may also be another network side device that stores or can acquire serving gateway information of a station, which is not specifically limited herein.

Optionally, the information management entity may actively send the first message to the first station, or may send the first message to the first station after receiving a request message sent by the first station, to respond to the request message.

Optionally, the information about the connection relationship between the second station and the serving gateway may be represented in multiple manners, such as an identifier of the serving gateway connected to the second station, the information indicating whether the second station is connected to the user equipment gateway, the identifier of the second station connected to the user equipment gateway, or the identifier of the second station not connected to the user equipment gateway. It may be understood that in an actual application, the information about the connection relationship between the second station and the serving gateway may also have another representation form, which is not specifically limited herein.

The connection relationship determining unit 1102 determines, according to the first message, whether the second station is connected to the user equipment gateway.

Because the first message carries the information about the connection relationship between the second station and the serving gateway, the first station may determine, according to the first message, whether the second station is connected to the user equipment gateway.

In an actual application, because data of user equipment is obtained from a serving gateway that provides a service for the user equipment, if more than two stations are required to serve same user equipment, it is required to first determine whether these joint serving stations are connected to the serving gateway that serves the user equipment. Therefore, in this embodiment of the present invention, a first station receives a first message sent by an information management entity, where the first message includes information about a connection relationship between a second station and a serving gateway, so that the first station can determine, according to the first message, whether the second station is connected to a user equipment gateway, where the user equipment gateway is a serving gateway connected to the first station and provides a service for the user equipment, and further, the first station can determine, according to a connection relationship between the second station and the user equipment gateway, whether the second station is suitable to provide a service for the user equipment, which provides a realizable condition for a station to actively look for a joint serving station for the user equipment.

Specifically, before the first message sent by the information management entity is received, the message sending unit 1103 may send the second message to the information management entity, where the second message includes the identifier of the second station, or the identifier of the first station and the identifier of the second station.

Optionally, the second message may be used to request the information about the connection relationship between the second station and the serving gateway, for example, the second message may be a dual-connection setup request message; the second station is one or more potential stations that may provide a service for the user equipment.

Optionally, the identifier of the first station and the identifier of the second station may be any one of or a combination of more than two of a tracking area identity (TAI, Tracking area identity) of a station, a station identifier (eNB ID, eNB), and a cell global identifier (ECGI, E-UTRAN Cell Global Identifier); the identifier of the first station and the identifier of the second station are respectively used to uniquely determine the first station and the second station. It may be understood that in an actual application, the identifier of the first station or the second station may also be represented by using another method, which is not specifically limited herein.

Specifically, in this embodiment of the present invention, when the first station requires the information management entity to return the information indicating whether the second station is connected to the user equipment gateway, in a case in which the information management entity needs to determine whether the second station is connected to the user equipment gateway, the information management entity needs to learn the following two pieces of information:
(1) the identifier of the user equipment and/or the IP address of the user equipment gateway; and
(2) the identifier of the second station, or the identifier of the first station and the identifier of the second station.

In this embodiment of the present invention, the second message may carry both of the foregoing two pieces of information (1) and (2), or carry only the information (2), and then acquire the information (1) by using another message or in another manner, where there is no strict time sequence for the information management entity to acquire the two pieces of information (1) and (2).

The identifier of the user equipment may be one or more of an MME UE S1AP ID, an eNB UE S1AP ID, an IMSI, and a GUMMEI. The eNB UE S1AP ID is used to uniquely identify a terminal on an S1 interface within an eNB (The eNB UE S1AP ID uniquely identify the UE association over the S1 interface within the eNB); the MME UE S1AP ID is used to uniquely identify a terminal on an S1 interface within an MME (The MME UE S1AP ID uniquely identify the UE association over the S1 interface within the MME); an international mobile subscriber identity (IMSI: International Mobile SubscriberIdentification Number (GUMMEI, Globally Unique Mobility Management Entity Identifier globally unique mobility management entity identifier) (IMEI, International Mobile Equipment Identity) are used to identify user equipment.

It may be understood that in an actual application, the identifier of the user equipment may also be represented by using another method, which is not specifically limited herein.

Specifically, the connection relationship determining unit 1102 may further determine, according to the information indicating whether the second station is connected to the user equipment gateway, whether the second station is connected to the user equipment gateway.

Optionally, in this embodiment of the present invention, the user equipment may be that the first station is a current serving station of the user equipment, or may be that the second station is a current serving station of the user equipment.

The first station and the second station may be any station of a Macro eNB, an RRH, Pico eNB, Mico eNB, an HeNB, an RN (relay node), and a wireless local area network access point.

Optionally, the information management entity may be a mobility management entity (MME, Mobility Management Entity), or may be an operation, administration and maintenance (OAM, Operation Administration and Maintenance) entity. It may be understood that in an actual application, the information management entity may also be another network side device that stores serving gateway information of a station, which is not specifically limited herein.

The user equipment refers to user equipment served by the first station or the second station. Optionally, in an actual application, if the first station actively requests the second station to serve the user equipment, the first station is a current serving station of the user equipment (that is, a station that provides a service for the user equipment); or if the first station is requested by the second station to serve the user equipment, the second station is a current serving station of the user equipment.

If the first station is a current serving station of the user equipment, after determining that the second station is connected to the user equipment gateway, the first station sends the sixth message to the second station, where the sixth message is used to request the second station to provide a service for the user equipment. The sixth message may be a handover request message, or an add secondary cell (add Scell) request message, and a specific type of the message is not limited herein. In the present invention, the requesting the second station to provide a service for the user equipment may be requesting one or more cells of the second station to serve as a serving cell of the user equipment. Details are not repeatedly described herein.

If the second station is a current serving station of the user equipment, the first station receives the third message sent by the second station, where the third message is used to request the first station to provide a service for the user equipment. After it is determined whether the second station is connected to the user equipment gateway, if the second station is connected to the user equipment gateway, the fourth message is returned to the second station, where the fourth message is used to indicate agreeing to provide a service for the user equipment; if the second station is not connected to the user equipment gateway, the fifth message is returned to the second station, where the fifth message is used to indicate refusing to provide a service for the user equipment.

In an actual application, if the first station is a serving station of the user equipment, the first station may simultaneously perform a query on the information management entity to determine connection relationships between multiple second stations and a serving gateway, so that the first station selects a more suitable serving station for the user equipment, which is specifically:
sending the second message to the information management entity; where
the first station sends the second message to the information management entity, where the second message includes the identifier of the second station, or the identifier of the first station and the identifier of the second station.

Optionally, the second message is used to request the information about the connection relationship between the second station and the serving gateway, where the serving gateway includes the user equipment gateway and the second gateway, the user equipment gateway is a serving gateway connected to the first station and provides a service for the user equipment, and the second gateway is a serving gateway connected to the second station.

The user equipment refers to user equipment served by the first station or the second station. Optionally, in an actual application, if the first station actively requests the second station to serve the user equipment, the first station is a current serving station of the user equipment (that is, a station that provides a service for the user equipment); or if the first station is requested by the second station to serve the user equipment, the second station is a current serving station of the user equipment.

Optionally, there may be multiple second stations. Further, the second station may be a neighboring station of the first station. The first station and the second station may be any station of a Macro eNB, an RRH, Pico eNB, Mico eNB, an HeNB, an RN (relay node), and a wireless local area network access point.

Specifically, in this embodiment of the present invention, if the information management entity needs to return the information indicating whether the second station is connected to the user equipment gateway, the information management entity needs to learn the following two pieces of information:
(1) the identifier of the user equipment and/or the IP address of the user equipment gateway; and
(2) the identifier of the second station, or the identifier of the first station and the identifier of the second station.

If the information management entity needs to return the identifier of the second gateway, the information management entity needs to learn the identifier of the second station, or the identifier of the first station and the identifier of the second station in the foregoing (2).

If the information management entity needs to return the identifier of the second station connected to the user equipment gateway, or the identifier of the second station not connected to the user equipment gateway, the information management entity needs to learn the identifier of the user equipment and/or the IP address of the user equipment gateway in the foregoing (1).

In this embodiment of the present invention, the second message may carry both of the foregoing two pieces of information (1) and (2), or carry only one piece of information (2) and (1), and then acquire the other piece of information by using another message or in another manner, where there is no strict time sequence for the information management entity to acquire the two pieces of information (1) and (2).

The message receiving unit 1101 receives the first message sent by the information management entity. In this embodiment of the present invention, the first message may be a response message of the second message. The first message includes the information about the connection relationship between the second station and the serving gateway.

The connection relationship determining unit 1102 determines, according to the first message, whether the second station is connected to the user equipment gateway.

Optionally, if the information about the connection relationship between the second station and the serving gateway is the identifier of the second gateway, the first station acquires the identifier of the user equipment gateway, and then determines, by means of comparison, whether one of identifiers of the second gateways is the same as the identifier of the user equipment gateway; and if one of the identifiers of the second gateways is the same as the identifier of the user equipment gateway, it is determined that the second station is connected to the user equipment gateway; or if none of the identifiers of the second gateways is the same as the identifier of the user equipment gateway, it is determined that the second station is not connected to the user equipment gateway.

Optionally, if the information about the connection relationship between the second station and the serving gateway is the identifier of the second station connected to the user equipment gateway, it is determined that the second station corresponding to the identifier that is of the second station and carried in the first message is connected to the user equipment gateway; or if the information about the connection relationship between the second station and the serving gateway is the identifier of the second station not connected to the user equipment gateway, the identifier that is of the second station and carried in the first message is compared with the identifier that is of the second station and carried in the second message, to determine the second station connected to the user equipment gateway.

If there is the second station connected to the user equipment gateway, the message sending unit 1103 sends the sixth message to the second station.

If there is the second station connected to the user equipment gateway, the sixth message is sent to the second station, where the sixth message is used to request the second station to provide a service for the user equipment, and the first station is a serving station of the user equipment. Optionally, any station sends the sixth message only after it is determined that the second station is connected to the user equipment gateway.

Optionally, the sixth message may carry the indication information used to confirm that the second station is connected to the user equipment gateway, so that the second station does not need to perform a query on the information management entity again to confirm a connection relationship between the second station and the user equipment gateway.

An embodiment of an information management entity configured to perform the foregoing information determining method according to the present invention is described in the following. Reference may be made to FIG. 12 for a logical structure of the information management entity. An embodiment of an information management entity according to an embodiment of the present invention includes:
a station determining unit 1201, configured to determine information about a connection relationship between a second station and a serving gateway; and
an information sending unit 1202, configured to send a first message to a first station, so that the first station determines, according to the first message, whether the second station is connected to a user equipment gateway, where the first message includes the information about the connection relationship between the second station and the serving gateway, and the user equipment gateway is a serving gateway connected to the first station and provides a service for user equipment.

Optionally, the information management entity further includes:
an information receiving unit 1203, configured to receive a second message sent by the first station, where the second message includes: an identifier of the second station, or an identifier of the first station and the identifier of the second station.

Optionally, the information sending unit 1202 is further configured to send an identifier of the user equipment and/or an IP address of the user equipment gateway to the information management entity.

Optionally, the station determining unit 1201 is specifically configured to:
create a fully qualified domain name of the second station according to the identifier of the second station, and perform a query in a domain name system DNS according to the fully qualified domain name, to determine a serving gateway connected to the second station; or
determine, according to the identifier of the second station and a serving gateway list stored in the information management entity, a serving gateway connected to the second station, where the serving gateway list is a list of a correspondence between the identifier of the second station and the serving gateway.

Optionally, the serving gateway includes:
a second gateway, where the second gateway is a serving gateway connected to the second station; and
accordingly, the first message includes/the information about the connection relationship between the second station and the serving gateway includes:
   an identifier of the second gateway.

Optionally, that the first message includes the information about the connection relationship between the second station and the serving gateway includes:
information indicating whether the second station is connected to the user equipment gateway; or
an identifier of a second station connected to the user equipment gateway; or
an identifier of a second station not connected to the user equipment gateway.

A specific interaction process of each unit in the information management entity in this embodiment of the present invention includes:
the station determining unit 1201 determines the information about the connection relationship between the second station and the serving gateway, where the serving gateway includes the user equipment gateway, and the user equipment gateway is a serving gateway connected to the first station and provides a service for the user equipment.

The first station and the second station may be any station of a Macro eNB, an RRH, Pico eNB, Mico eNB, an HeNB, an RN (relay node), and a wireless local area network access point.

The user equipment refers to user equipment served by the first station or the second station. Optionally, in an actual application, if the first station actively requests the second station to serve the user equipment, the first station is a serving station of the user equipment (that is, the serving station of the user equipment is a station that provides a service for the user equipment, the serving station may be called a serving node, and specifically, a cell that is of the first station and provides a service for the user equipment is called a serving cell (serving cell)); or if the first station is requested by the second station to serve the user equipment, the second station is a serving station of the user equipment.

Optionally, the information management entity may be an MME, or may be an OAM. It may be understood that in an actual application, the information management entity may also be another network side device that stores serving gateway information of a station, which is not specifically limited herein.

Optionally, the information about the connection relationship between the second station and the serving gateway may be represented in multiple manners, such as an identifier of the serving gateway connected to the second station, the information indicating whether the second station is connected to the user equipment gateway, the identifier of the second station connected to the user equipment gateway, or the identifier of the second station not connected to the user equipment gateway. It may be understood that in an actual application, the information about the connection relationship between the second station and the serving gateway may also have another representation form, which is not specifically limited herein.

Optionally, the information management entity may create the fully qualified domain name (FQDN, Fully Qualified Domain Name) of the second station according to the identifier of the second station, and perform a query in the domain name system (DNS, Domain Name System) according to the fully qualified domain name, to determine a serving gateway connected to the second station; or
determine, according to the identifier of the second station and the serving gateway list stored in the information management entity, a serving gateway connected to the second station, where the serving gateway list is a list of the correspondence between the identifier of the second station and the serving gateway. In an actual application, the information management entity may store a list of the serving gateway list in a query requested by another station or in an application of another service, and the information management entity may directly locally acquire the information about the connection relationship between the second station and the serving gateway, without a need to perform a query in the DNS again.

After the information about the connection relationship between the second station and the serving gateway is determined, the information sending unit 1202 sends the first message to the first station, where the first message includes the information about the connection relationship between the second station and the serving gateway, so that the first station determines, according to the information about the connection relationship between the second station and the serving gateway, whether the second station is connected to the user equipment gateway.

For description, the following uses an example in which the first station requests the information management entity for dual-connection setup. Before the information about the connection relationship between the second station and the serving gateway is determined, the information receiving unit 1203 may further receive the second message sent by the first station, where the second message includes: the identifier of the second station, or the identifier of the first station and the identifier of the second station.

Optionally, the second message may be used to request the information about the connection relationship between the second station and the serving gateway, for example, the second message may be a dual-connection setup request message; the second station is one or more potential stations that may provide a service for the user equipment.

Optionally, the identifier of the first station and the identifier of the second station may be any one of or a combination of more than two of a tracking area identity (TAI, Tracking area identity) of a station, a station identifier (eNB ID, eNB), and a cell global identifier (ECGI, E-UTRAN Cell Global Identifier); the identifier of the first station and the identifier of the second station are respectively used to uniquely determine the first station and the second station. It may be understood that in an actual application, the identifier of the first station or the second station may also be represented by using another method, which is not specifically limited herein.

Specifically, in this embodiment of the present invention, when the first station requires the information management entity to return the information indicating whether the second station is connected to the user equipment gateway, in a case in which the information management entity needs to determine whether the second station is connected to the user equipment gateway, the information management entity needs to learn the following two pieces of information:
(1) the identifier of the user equipment and/or the IP address of the user equipment gateway; and
(2) the identifier of the second station, or the identifier of the first station and the identifier of the second station.

In this embodiment of the present invention, the second message may carry both of the foregoing two pieces of information (1) and (2), or carry only the information (2), and then acquire the information (1) by using another message or in another manner, where there is no strict time sequence for the information management entity to acquire the two pieces of information (1) and (2).

After the second message is received, the station determining unit 1201 sends the first message to the first station, where the message includes the information about the connection relationship between the second station and the serving gateway, and the information about the connection relationship between the second station and the serving gateway may be specifically the information indicating whether the second station is connected to the user equipment gateway. The user equipment gateway is a serving gateway connected to the first station and provides a service for the user equipment.

Specifically, after receiving the second message sent by the first station, the information management entity determines, according to the identifier that is of the second station and included in the second message, the information about the connection relationship between the second station and the serving gateway.

Specifically, the information management entity may create the fully qualified domain name of the second station according to the identifier of the second station, and perform a query in the domain name system DNS according to the fully qualified domain name, to determine a serving gateway connected to the second station; or determine, according to the identifier of the second station and the serving gateway list stored in the information management entity, a serving gateway connected to the second station, where the serving gateway list is a list of the correspondence between the identifier of the second station and the serving gateway. In an actual application, the information management entity may store a list of the serving gateway list in a query requested by another station or in an application of another service, and the information management entity may directly locally acquire the information about the connection relationship between the second station and the serving gateway, without a need to perform a query in the DNS again. In this embodiment of the present invention, how the information management entity determines the user equipment gateway is not limited to the two manners provided in this embodiment of the present invention, which is not specifically limited herein.

In an actual application, after receiving the second message, the information management entity may first confirm whether a requested station (that is, the second station in this embodiment of the present invention) and a requesting station (that is, the first station in this embodiment of the present invention) are connected to a same serving gateway, and then send the first message to the first station, where the first message carries the information about the connection relationship between the second station and the serving gateway.

In an actual application, if the first station is a serving station of the user equipment, the first station may simultaneously perform a query on the information management entity to determine connection relationships between multiple second stations and a serving gateway, so that the first station selects a more suitable serving station for the user equipment. The information receiving unit 1203 may further receive the second message sent by the first station. Optionally, the second message is used to request the information about the connection relationship between the second station and the serving gateway, where the serving gateway includes the user equipment gateway and the second gateway, the user equipment gateway is a serving gateway connected to the first station and provides a service for the user equipment, and the second gateway is a serving gateway connected to the second station.

The user equipment refers to user equipment served by the first station or the second station. Optionally, in an actual application, if the first station actively requests the second station to serve the user equipment, the first station is a current serving station of the user equipment (that is, a station that provides a service for the user equipment); or if the first station is requested by the second station to serve the user equipment, the second station is a current serving station of the user equipment.

Optionally, there may be multiple second stations. Further, the second station may be a neighboring station of the first station. The first station and the second station may be any station of a Macro eNB, an RRH, Pico eNB, Mico eNB, an HeNB, an RN (relay node), and a wireless local area network access point.

Specifically, in this embodiment of the present invention, if the information management entity needs to return the information indicating whether the second station is connected to the user equipment gateway, the information management entity needs to learn the following two pieces of information:
(1) the identifier of the user equipment and/or the IP address of the user equipment gateway; and
(2) the identifier of the second station, or the identifier of the first station and the identifier of the second station.

If the information management entity needs to return the identifier of the second gateway, the information management entity needs to learn the identifier of the second station, or the identifier of the first station and the identifier of the second station in the foregoing (2).

If the information management entity needs to return the identifier of the second station connected to the user equipment gateway, or the identifier of the second station not connected to the user equipment gateway, the information management entity needs to learn the identifier of the user equipment and/or the IP address of the user equipment gateway in the foregoing (1).

In this embodiment of the present invention, the second message may carry both of the foregoing two pieces of information (1) and (2), or carry only one piece of information (2) and (1), and then acquire the other piece of information by using another message or in another manner, where there is no strict time sequence for the information management entity to acquire the two pieces of information (1) and (2).

In this embodiment of the present invention, after the second message is received, if the second message includes the identifier of the user equipment and/or the IP address of the user equipment gateway, or the second message is used to request information about all stations connected to the user equipment gateway, the information management entity determines the user equipment gateway by using the identifier of the user equipment and/or the IP address of the user equipment gateway, determines a station connected to the user equipment gateway (which may be all the stations connected to the user equipment gateway, may be some of the stations, or may be one or more stations), and then sends, to the first station, the first message that carries "an identifier of a second station connected to the user equipment gateway". In this case, the information about the connection relationship between the second station and the serving gateway is the identifier of the second station connected to the user equipment gateway.

If the second message is used to request to query connection relationships between at least one (one or more) second stations and the user equipment gateway, the information management entity needs to acquire the identifier of the first station and the identifier of the second station, and determine the user equipment gateway and the second gateway according to the identifier of the first station and the identifier of the second station respectively. If a second gateway corresponding to any second station includes the user equipment gateway, the second station is connected to the user equipment gateway; after determining the connection relationships between the several second stations and the user equipment gateway, the information management entity sends, to the first station, the first message that carries "an identifier of a second station connected to the user equipment gateway, or an identifier of a second station not connected to the user equipment gateway". There may also be many methods for determining whether the second station is connected to the user equipment gateway. For example, after determining the user equipment gateway, the information management entity obtains information about a station connected to the user equipment gateway, and then determines, by means of comparison, whether the second station is a station connected to the second gateway; and the connection relationship between the second station and the serving gateway is fed back after the determining. In this case, the information about the connection relationship between the second station and the serving gateway is the first message that carries "an identifier of a second station connected to the user equipment gateway or an identifier of a second station not connected to the user equipment gateway".

If the second message is used to request to query several second gateways of the second station, the information management entity needs to acquire the identifier of the second station, determine the second gateway according to the identifier of the second station, and then send, to the first station, the first message that carries "an identifier of the second gateway". In this case, the information about the connection relationship between the second station and the serving gateway is the identifier of the second gateway, and the identifier of the second gateway includes any one of or a combination of more than two of an SGW ID, an SGW ID index, and an SGW name.

Specifically, a method for determining the second gateway by the station determining unit 1201 may be: creating the fully qualified domain name of the second station according to the identifier of the second station, and performing a query in the domain name system DNS according to the fully qualified domain name, to determine a serving gateway connected to the second station; or determining, according to the identifier of the second station and the serving gateway list stored in the information management entity, a serving gateway connected to the second station, where the serving gateway list is a list of the correspondence between the identifier of the second station and the serving gateway. In an actual application, the information management entity may store a list of the serving gateway list in a query requested by another station or in an application of another service, and the information management entity may directly locally acquire the information about the connection relationship between the second station and the serving gateway, without a need to perform a query in the DNS again.

The foregoing description about how to determine the connection relationship between the second station and the serving gateway is merely exemplary. It may be understood that in an actual application, there may be another implementation manner, which is not specifically limited herein.

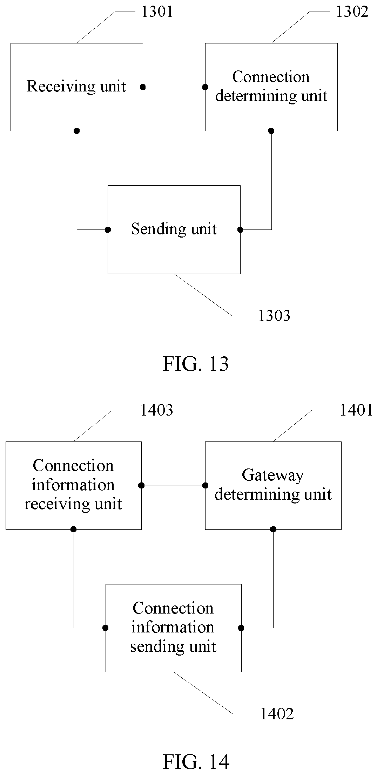

An embodiment of a station configured to perform the foregoing information determining method according to the present invention is described in the following. Reference may be made to FIG. 13 for a logical structure of the station. Another embodiment of a station according to an embodiment of the present invention includes:
a receiving unit 1301, configured to receive an identifier that is of a user equipment gateway and sent by an information management entity, where the user equipment gateway is a serving gateway connected to a first station and provides a service for user equipment; and
a connection determining unit 1302, configured by the first station to determine, according to the identifier of the user equipment gateway, a station connected to the user equipment gateway.

Optionally, the station further includes:
a sending unit 1303, configured to send a first message to the information management entity, where the first message includes an IP address of the user equipment gateway and/or an identifier of the user equipment.

Optionally, the receiving unit 1301 is further configured to receive an identifier that is of the station connected to the user equipment gateway and sent by the information management entity; and
the connection determining unit 1302 is further specifically configured to:
determine, according to the identifier of the station connected to the user equipment gateway, the station connected to the user equipment gateway.

Optionally, the receiving unit 1301 is further configured to receive an identifier that is of a station connected to a first gateway and sent by the information management entity, where the first gateway is a serving gateway connected to the first station; and
the connection determining unit 1302 is further specifically configured to:
determine, according to the identifier of the user equipment gateway and the identifier of the station connected to the first gateway, the station connected to the user equipment gateway.

Optionally, the receiving unit 1301 is further configured to receive an identifier that is of a first gateway and sent by the information management entity, where the first gateway is a serving gateway connected to the first station.

Optionally, the receiving unit 1301 is further configured to receive a second response message sent by a second station, where the second response message includes an identifier of a second gateway; and
the connection determining unit 1302 is further specifically configured to:
determine, according to the identifier of the user equipment gateway and the identifier of the second gateway, whether the second station is connected to the user equipment gateway.

Optionally, the sending unit 1303 is further configured to:
send a second message to a second station, where the second message includes the identifier of the first gateway, so that the second station returns an identifier of a second gateway, and the second gateway is a serving gateway connected to the second station;
the receiving unit 1301 is further configured to receive a second response message sent by the second station, where the second response message includes the identifier of the second gateway; and
the connection determining unit 1302 is further configured to:
   determine, according to the identifier of the user equipment gateway and the identifier of the second gateway, whether the second station is connected to the user equipment gateway.

Optionally, the sending unit 1303 is further configured to send a third message to a second station, where the third message includes the identifier of the user equipment gateway, so that the second station determines, according to the identifier of the user equipment gateway and an identifier of a second gateway, whether the second station is connected to the user equipment gateway.

Optionally, the receiving unit 1301 is further configured to:
receive a third response message sent by the second station, where the third response message is used to indicate whether the second station is connected to the user equipment gateway, or indicate agreeing to provide a service for the user equipment.

Optionally, the connection determining unit 1302 is further configured to determine, according to an indication of the third response message, whether the second station is connected to the user equipment gateway.

Optionally, the sending unit 1303 is further specifically configured to:
if it is determined that the second station is connected to the user equipment gateway, send a fourth message to the second station, where the fourth message is used to request the second station to provide a service for the user equipment, and the first station is a serving station of the user equipment.

Optionally, the identifier of the first gateway or the second gateway includes any one of or a combination of more than one of an SGW ID, an SGW ID index, an SGW name, a PGW ID, a PGW ID index, and a PGW name.

Optionally, the identifier of the first gateway or the second gateway includes any one of or a combination of more than one of an SGW ID, an SGW ID index, an SGW name, a PGW ID, a PGW ID index, and a PGW name.

A specific interaction process of each unit in the station in this embodiment of the present invention includes:
the receiving unit 1301 receives the identifier that is of the user equipment gateway and sent by the information management entity, where the user equipment gateway is a serving gateway connected to the first station and provides a service for the user equipment.

Optionally, the identifier of the user equipment gateway includes any one of or a combination of more than two of an SGW ID, an SGW ID index, and an SGW name.

The first station may be any station of a Macro cell, an RRH, a Pico eNB, an HeNB, an RN, and a wireless local area network access point.

Optionally, the information management entity may be a mobility management entity (MME, Mobility Management Entity), or may be an operation, administration and maintenance (OAM, Operation Administration and Maintenance) entity. It may be understood that in an actual application, the information management entity may also be another network side device that stores serving gateway information of a station, which is not specifically limited herein.

Optionally, the information management entity may actively send the identifier of the user equipment gateway to the first station, or may send the identifier of the user equipment gateway to the first station after receiving a request message that is of the identifier of the user equipment gateway and sent by the first station.

The connection determining unit 1302 determines, according to the identifier of the user equipment gateway, the station connected to the user equipment gateway.

Optionally, the first station may directly determine, by using information provided by the information management entity, the station connected to the user equipment gateway; or may interact with the second station according to information provided by the information management entity, to determine the station connected to the user equipment gateway, which is not specifically limited herein.

In an actual application, the first station may also request the identifier of the user equipment gateway and the identifier of the first gateway from the information management entity, so that the first station can interact with the second station for an identifier of a serving gateway connected to the peer station, to determine whether the peer station is connected to a same serving gateway to which the own station is connected. Specifically, the sending unit 1303 may send the first message to the information management entity, where the first message includes the IP address of the user equipment gateway and/or the identifier of the user equipment.

The first message may be used to request the identifier of the user equipment gateway, where the user equipment gateway is a serving gateway connected to the first station and provides a service for the user equipment, and the first message may be used to request the identifier of the user equipment gateway according to the identifier of the user equipment. In an actual application, the first message may be: an S1 user equipment context setup request message or a bearer setup request message. It may be understood that in an actual application, the first message may also be another application message that carries the identifier of the user equipment and an identifier of the first station, which is not specifically limited herein.

Optionally, the first message may be used to request the identifier of the first gateway, where the first gateway is a serving gateway connected to the first station, and the first message may be used to request the identifier of the user equipment gateway according to the identifier of the first station.

Optionally, the first message may also be used to request the identifier of the user equipment gateway and the identifier of the first gateway, and the first message may be used to request the identifier of the user equipment gateway according to the identifier of the user equipment and the identifier of the first station.

It may be understood that in an actual application, the first station may also request the identifier of the first gateway by using a separate message, or the information management entity actively sends the identifier of the first gateway to the first station, or the first station acquires the identifier of the first gateway from a local query history. A specific implementation manner is not limited herein.

The receiving unit 1301 receives identifiers that are of the user equipment gateway and the first gateway and that are sent by the information management entity. Optionally, the information management entity may send the identifier of the user equipment gateway to the first station after receiving the first message, or may actively send the identifier of the user equipment gateway to the first station.

Specifically, an identifier of a gateway may be any one of or a combination of more than two of a serving gateway (SGW, serving Gateway) ID, an SGW ID index, an SGW name, a packet gateway (PGW, Packet Gateway) ID, a PGW ID index, and a PGW name.

Specifically, before the information management entity determines the user equipment gateway, the information management entity needs to acquire the identifier of the user equipment and/or the IP address of the user equipment gateway. Optionally, the identifier of the user equipment and/or the IP address of the user equipment gateway may be carried in the first message, or may be acquired by the information management entity in another manner, which is not specifically limited herein.

In an actual application, as long as the information management entity learns the identifier of the user equipment and/or the IP address of the user equipment gateway, the information management entity may query, for the first station, the identifier of the user equipment gateway. For example, because the user equipment gateway is selected by the information management entity (for example, an MME) for the user equipment, as long as the information management entity learns the identifier of the user equipment and/or the IP address of the user equipment gateway, the information management entity may query, for the first station, the identifier of the user equipment gateway. Specifically, the user equipment gateway may be a serving gateway selected by the information management entity for the user equipment when the user equipment is connected to a network, and therefore the information management entity learns information about a gateway that provides a service for the user equipment. In this case, after the user equipment gateway is selected for the user equipment, the information management entity may provide the identifier of the user equipment gateway for the first station at any time.

Further, the information management entity may further send the identifier of the first gateway to the first station; before determining the first gateway, the information management entity needs to acquire the identifier of the first station. Optionally, the identifier of the first station may be sent to the information management entity by using the first message, and the information management entity may also acquire the identifier of the first station in another manner, which is not specifically limited herein.

After receiving the identifier of the first station, the information management entity determines the first gateway according to the first message and the identifier of the first station. The first gateway may be determined in the following manner: Specifically, the information management entity may create a fully qualified domain name of the first station according to the identifier of the first station, and perform a query in a DNS according to the fully qualified domain name, to determine a serving gateway connected to the first station; or determine, according to the identifier of the first station and a serving gateway list stored in the information management entity, a serving gateway connected to the first station, where the serving gateway list is a list of a correspondence between the identifier of the first station and the serving gateway. In an actual application, the information management entity may store a list of the serving gateway list in a query requested by another station or in an application of another service, and the information management entity may directly locally acquire information about a connection relationship between the first station and the serving gateway, without a need to perform a query in the DNS again. In this embodiment of the present invention, how the information management entity determines the first gateway is not limited to the two manners provided in this embodiment of the present invention, which is not specifically limited herein.

Optionally, the information management entity may send the identifier of the first gateway to the first station, where the identifier of the first gateway may be sent together with the identifier of the user equipment gateway to the first station by using one message, or may be sent to the first station by using a different message, which is not specifically limited herein.

The sending unit 1303 sends the second message to the second station.

Optionally, after the identifier of the user equipment gateway and the identifier of the first gateway are received, the sending unit 1303 may send the second message to the second station, and the second message includes the identifier of the first gateway, so that the second station returns the identifier of the second gateway, where the second gateway is a serving gateway connected to the second station.

Exemplarily, the second message may be an X2 interface setup request message. It may be understood that in an actual application, the second message may also be another message that carries information about a connection relationship between a station and a serving gateway, which is not specifically limited herein.

The receiving unit 1301 receives the second response message sent by the second station.

Optionally, the first station receives the second response message sent by the second station, where the second response message includes the identifier of the second gateway. Exemplarily, the second response message may be an X2 interface setup response message.

Optionally, in this embodiment of the present invention, because a station spontaneously queries, in the information management entity, an identifier of a serving gateway connected to the station, and interacts with each station for an identifier of a serving gateway connected to each station, the second response message is not necessarily a response message of the second message, and may also be a message actively sent by the second station to the first station.

Finally, the connection determining unit 1302 determines, according to the identifier of the user equipment gateway, the station connected to the user equipment gateway.

Specifically, after acquiring the identifier of the second gateway, the first station may determine, according to the identifier of the user equipment gateway and the identifier of the second gateway, whether the second station is connected to the user equipment gateway. That is, the second gateways are searched to determine whether one of the second gateways is the user equipment gateway.

If it is determined that the second station is connected to the user equipment gateway, the first station sends the fourth message to the second station, where the fourth message is used to request the second station to provide a service for the user equipment, and the first station is a serving station of the user equipment.

Exemplarily, the fourth message may be specifically a handover response message, an add secondary cell message, or the like, which is not specifically limited.

In an actual application, if the first station is a serving station of the user equipment, the first station may directly send the identifier of the user equipment gateway to the second station, and the second station determines whether the second station is connected to the user equipment gateway, and then returns related connection information to the first station. Specifically, the sending unit 1303 sends the first message to the information management entity, where the first message includes the IP address of the user equipment gateway and/or the identifier of the user equipment.

The first message may be used to request the identifier of the user equipment gateway, where the user equipment gateway is a serving gateway connected to the first station and provides a service for the user equipment, and the first message may be used to request the identifier of the user equipment gateway according to the identifier of the user equipment. In an actual application, the first message may be: an S1 user equipment context setup request message or a bearer setup request message. It may be understood that in an actual application, the first message may also be another application message that carries the identifier of the user equipment and the identifier of the first station, which is not specifically limited herein.

Then the receiving unit 1301 receives the identifier that is of the user equipment gateway and sent by the information management entity.

Optionally, the information management entity may send the identifier of the user equipment gateway to the first station after receiving the first message, or may actively send the identifier of the user equipment gateway to the first station.

Specifically, an identifier of a gateway may be any one of or a combination of more than two of an SGW ID, an SGW ID index, an SGW name, a PGW ID, a PGW ID index, and a PGW name.

Specifically, before the information management entity determines the user equipment gateway, the information management entity needs to acquire the identifier of the user equipment and/or the IP address of the user equipment gateway. Optionally, the identifier of the user equipment and/or the IP address of the user equipment gateway may be carried in the first message, or may be acquired by the information management entity in another manner, which is not specifically limited herein.

In an actual application, as long as the information management entity learns the identifier of the user equipment and/or the IP address of the user equipment gateway, the information management entity may query, for the first station, the identifier of the user equipment gateway. For example, because the user equipment gateway is selected by the information management entity (for example, an MME) for the user equipment, as long as the information management entity learns the identifier of the user equipment and/or the IP address of the user equipment gateway, the information management entity may query, for the first station, the identifier of the user equipment gateway. Specifically, the user equipment gateway may be a serving gateway selected by the information management entity for the user equipment when the user equipment is connected to a network, and therefore the information management entity learns information about a gateway that provides a service for the user equipment. In this case, after the user equipment gateway is selected for the user equipment, the information management entity may provide the identifier of the user equipment gateway for the first station at any time.

Then the sending unit 1303 sends the third message to the second station, where the third message includes the identifier of the user equipment gateway, so that the second station determines, according to the identifier of the user equipment gateway and the identifier of the second gateway, whether the second station is connected to the user equipment gateway.

Then the receiving unit 1301 receives the third response message sent by the second station, where the third response message is used to indicate whether the second station is connected to the user equipment gateway, or indicate agreeing to provide a service for the user equipment.

Finally, the connection determining unit 1302 determines, according to the identifier of the user equipment gateway, the station connected to the user equipment gateway.

Specifically, after acquiring the third response message, the first station determines, according to an indication of the third response message, whether the second station is connected to the user equipment gateway.

If it is determined that the second station is connected to the user equipment gateway, the first station sends the fourth message to the second station, where the fourth message is used to request the second station to provide a service for the user equipment, and the first station is a serving station of the user equipment.

Exemplarily, the fourth message may be specifically a handover response message, an add secondary cell message, or the like, which is not specifically limited.

In an actual application, the information management entity may directly send, to the first station, information about a station connected to the user equipment gateway. Specifically, the sending unit 1303 may send the first message to the information management entity, where the first message includes the IP address of the user equipment gateway and/or the identifier of the user equipment.

Optionally, the first message may be used to request the identifier of the user equipment gateway, the user equipment gateway is a serving gateway connected to the first station and provides a service for the user equipment, and the first message may be used to request the identifier of the user equipment gateway according to the identifier of the user equipment. In an actual application, the first message may be: an S1 user equipment context setup request message or a bearer setup request message. It may be understood that in an actual application, the first message may also be another application message that carries the identifier of the user equipment and the identifier of the first station, which is not specifically limited herein.

Optionally, the first message may further be used to request an identifier of a station connected to the user equipment gateway. It may be understood that in an actual application, the first station may also request, by using a separate message, the identifier of the station connected to the user equipment gateway, or the information management entity actively sends, to the first station, the identifier of the station connected to the user equipment gateway. A specific implementation manner is not limited herein.

The receiving unit 1301 receives the identifier that is of the station connected to the user equipment gateway and sent by the information management entity.

Optionally, the information management entity may send the identifier of the user equipment gateway to the first station after receiving the first message, or may actively send the identifier of the user equipment gateway to the first station.

Specifically, an identifier of a gateway may be any one of or a combination of more than two of an SGW ID, an SGW ID index, an SGW name, a PGW ID, a PGW ID index, and a PGW name.

Specifically, before the information management entity determines the user equipment gateway, the information management entity needs to acquire the identifier of the user equipment and/or the IP address of the user equipment gateway. Optionally, the identifier of the user equipment and/or the IP address of the user equipment gateway may be carried in the first message, or may be acquired by the information management entity in another manner, which is not specifically limited herein.

In an actual application, because the user equipment gateway is selected by the information management entity for the user equipment, as long as the information management entity learns the identifier of the user equipment and/or the IP address of the user equipment gateway, the information management entity may query, for the first station, the identifier of the user equipment gateway. Specifically, the user equipment gateway may be a serving gateway selected by the information management entity for the user equipment when the user equipment is connected to a network, and therefore the information management entity learns information about a gateway that provides a service for the user equipment. In this case, after the user equipment gateway is selected for the user equipment, the information management entity may provide the identifier of the user equipment gateway for the first station at any time.

After determining the identifier of the user equipment gateway, the information management entity determines the identifier of the station connected to the user equipment gateway and sends, to the first station, the identifier of the station connected to the user equipment gateway, where the identifier of the station connected to the user equipment gateway may be sent together with the identifier of the user equipment gateway to the first station by using one message, or may be sent to the first station by using a different message, which is not specifically limited herein.

Then the connection determining unit 1302 determines, according to the identifier of the user equipment gateway, the station connected to the user equipment gateway.

Before determining the station connected to the user equipment gateway, the first station further receives the identifier that is of the station connected to the user equipment gateway and sent by the information management entity.

Specifically, the first station may determine, according to the identifier of the station connected to the user equipment gateway, the station connected to the user equipment gateway.

Specifically, a gateway that provides a service for the user equipment may be known according to the identifier that is of the user equipment gateway and received by the first station.

Finally, the sending unit 1303 sends the fourth message to the second station.

In this embodiment of the present invention, the second station is a station connected to the user equipment gateway, and the first station sends the fourth message to the second station, where the fourth message is used to request the second station to provide a service for the user equipment.

An embodiment of an information management entity configured to perform the foregoing information determining method according to the present invention is described in the following. Reference may be made to FIG. 14 for a logical structure of the information management entity. Another embodiment of an information management entity according to an embodiment of the present invention includes:
a gateway determining unit 1401, configured to determine a user equipment gateway, where the user equipment gateway is a serving gateway connected to a first station and provides a service for user equipment; and
a connection information sending unit 1402, configured to send an identifier of the user equipment gateway to the first station, so that the first station determines, according to the identifier of the user equipment gateway, a station connected to the user equipment gateway.

Optionally, the information management entity further includes: a connection information receiving unit 1403, configured to receive a first message sent by the first station, where the first message includes an IP address of the user equipment gateway and/or an identifier of the user equipment; or before the user equipment gateway is determined, further including: acquiring an identifier of the first station.

Optionally, the first message includes an S1 user equipment context setup request message or a bearer setup request message.

Optionally, the gateway determining unit 1401 is specifically configured to determine the user equipment gateway according to an identifier of the user equipment.

Optionally, the gateway determining unit 1401 is further specifically configured to:
create a fully qualified domain name of the first station according to the identifier of the first station, and perform a query on a DNS server according to the fully qualified domain name, to determine a serving gateway connected to the first station; or
determine, according to the identifier of the first station and a serving gateway list stored in the information management entity, a serving gateway connected to the first station, where the serving gateway list is a list of a correspondence between an identifier of a second station and a serving gateway.

The connection information sending unit 1402 is further configured to send an identifier of a first gateway to the first station, or send an identifier of a station connected to the first gateway.

A specific interaction process of each unit in the information management entity in this embodiment of the present invention includes:
the gateway determining unit 1401 determines the user equipment gateway, where the user equipment gateway is a serving gateway connected to the first station and provides a service for the user equipment.

Optionally, the identifier of the user equipment gateway includes any one of or a combination of more than two of an SGW ID, an SGW ID index, and an SGW name.

The connection information sending unit 1402 sends the identifier of the user equipment gateway to the first station, so that the first station determines, according to the identifier of the user equipment gateway, the station connected to the user equipment gateway.

Optionally, in an actual application, the information management entity may actively provide the identifier of the user equipment gateway for the first station, or to respond to a request of the first station, provide the identifier of the user equipment gateway for the first station, which is not specifically limited herein.

Optionally, before the user equipment gateway is determined, the connection information receiving unit may further be configured to receive the first message sent by the first station, where the first message includes the IP address of the user equipment gateway and/or the identifier of the user equipment; or before the user equipment gateway is determined, further including: acquiring the identifier of the first station.

An embodiment of the present invention further provides a computer storage medium. The computer storage medium may store a program, and when being performed, the program includes some or all of the steps of the information determining method as described in the foregoing method embodiments.

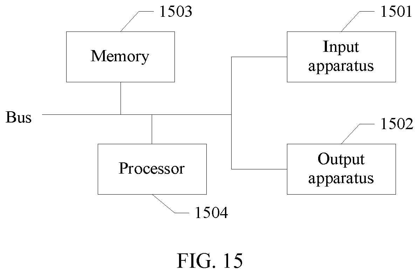

Referring to FIG. 15, an embodiment of the present invention further provides a station, which may include:
an input apparatus 1501, an output apparatus 1502, a memory 1503, and a processor 1504 (a quantity of processors in the station may be one or more, and in FIG. 15, one processor is used as an example). In some embodiments of the present invention, the input apparatus 1501, the output apparatus 1502, the memory 1503, and the processor 1504 may be connected by using a bus or in another manner. In FIG. 15, a connection implemented by using a bus is used as an example.

The input apparatus performs the following steps:
receiving a first message sent by an information management entity, where the first message includes information about a connection relationship between a second station and a serving gateway; and
receiving a third message sent by the second station, where the third message is used to request a first station to provide a service for a user equipment, and the second station is a serving station of the user equipment.

The output apparatus performs the following steps:
sending a second message to the information management entity, where the second message includes an identifier of the second station, an identifier of the first station, or the identifier of the first station and the identifier of the second station; or
sending an identifier of the user equipment and/or an IP address of a user equipment gateway to the information management entity; and
if the second station is connected to the user equipment gateway, returning a fourth message to the second station, where the fourth message is used to indicate agreeing to provide a service for the user equipment; or if the second station is not connected to the user equipment gateway, returning a fifth message to the second station, where the fifth message is used to indicate refusing to provide a service for the user equipment; or
if the second station is connected to the user equipment gateway, sending, a sixth message to the second station, where the sixth message is used to request the second station to provide a service for the user equipment, and the first station is a serving station of the user equipment.

The memory stores the following content:
The identifier of the first station includes at least one of a tracking area identity TAI, a station identifier eNB ID, a station identifier index eNB ID index, and a cell global identifier ECGI.

The identifier of the second station includes at least one of a tracking area identity TAI, a station identifier eNB ID, a station identifier index eNB ID index, and a cell global identifier ECGI.

The identifier of the user equipment includes any one of or a combination of more than two of an international mobile subscriber identity IMSI, a globally unique mobility management entity identifier GUMMEI, an eNB UE S1AP ID, and an MME eNB UE S1AP ID.

An identifier of the user equipment gateway, a first gateway, or a second gateway includes any one of or a combination of more than one of an SGW ID, an SGW ID index, an SGW name, a PGW ID, a PGW ID index, and a PGW name.

The processor performs the following step:
determining, according to the first message, whether the second station is connected to the user equipment gateway, where the user equipment gateway is a serving gateway connected to the first station and provides a service for the user equipment.

Specifically, because the first message carries the information about the connection relationship between the second station and the serving gateway, the first station may determine, according to the first message, whether the second station is connected to the user equipment gateway.

In an actual application, because data of user equipment is obtained from a serving gateway that provides a service for the user equipment, if more than two stations are required to serve same user equipment, it is required to first determine whether these joint serving stations are connected to the serving gateway that serves the user equipment. Therefore, in this embodiment of the present invention, a first station receives a first message sent by an information management entity, where the first message includes information about a connection relationship between a second station and a serving gateway, so that the first station can determine, according to the first message, whether the second station is connected to a user equipment gateway, where the user equipment gateway is a serving gateway connected to the first station and provides a service for the user equipment, and further, the first station can determine, according to a connection relationship between the second station and the user equipment gateway, whether the second station is suitable to provide a service for the user equipment, which provides a realizable condition for a station to actively look for a joint serving station for the user equipment.

Still referring to FIG. 15, an embodiment of the present invention further provides an information management entity, which may include:
an input apparatus 1501, an output apparatus 1502, a memory 1503, and a processor 1504 (a quantity of processors in the information management entity may be one or more, and in FIG. 15, one processor is used as an example). In some embodiments of the present invention, the input apparatus 1501, the output apparatus 1502, the memory 1503, and the processor 1504 may be connected by using a bus or in another manner. In FIG. 15, a connection implemented by using a bus is used as an example.

The input apparatus performs the following step:
receiving a second message sent by a first station, where the second message includes: an identifier of a second station, or an identifier of the first station and the identifier of the second station.

The output apparatus performs the following steps:
sending a first message to the first station, so that the first station determines, according to the first message, whether the second station is connected to a user equipment gateway, where the first message includes information about a connection relationship between the second station and a serving gateway, and the user equipment gateway is a serving gateway connected to the first station and provides a service for user equipment; and
sending an identifier of the user equipment and/or an IP address of the user equipment gateway to the information management entity.

The memory stores the following content:

The serving gateway includes:
a second gateway, where the second gateway is a serving gateway connected to the second station; and
accordingly, the first message includes/the information about the connection relationship between the second station and the serving gateway includes an identifier of the second gateway.

That the first message includes the information about the connection relationship between the second station and the serving gateway includes:
information indicating whether the second station is connected to the user equipment gateway; or
an identifier of a second station connected to the user equipment gateway; or
an identifier of a second station not connected to the user equipment gateway.

The processor performs the following step:
determining the information about the connection relationship between the second station and the serving gateway.

Specifically, a fully qualified domain name of the second station may be created according to the identifier of the second station, and a query may be performed in a domain name system DNS according to the fully qualified domain name, to determine a serving gateway connected to the second station; or
a serving gateway connected to the second station may be determined according to the identifier of the second station and a serving gateway list stored in the information management entity, where the serving gateway list is a list of a correspondence between the identifier of the second station and the serving gateway.

Still referring to FIG. 15, an embodiment of the present invention further provides a station, which may include:
an input apparatus 1501, an output apparatus 1502, a memory 1503, and a processor 1504 (a quantity of processors in the station may be one or more, and in FIG. 15, one processor is used as an example). In some embodiments of the present invention, the input apparatus 1501, the output apparatus 1502, the memory 1503, and the processor 1504 may be connected by using a bus or in another manner. In FIG. 15, a connection implemented by using a bus is used as an example.

The input apparatus performs the following steps:
receiving an identifier that is of a user equipment gateway and sent by an information management entity, where the user equipment gateway is a serving gateway connected to a first station and provides a service for user equipment; and
receiving an identifier that is of a station connected to the user equipment gateway and sent by the information management entity; or
receiving an identifier that is of a station connected to a first gateway and sent by the information management entity, where the first gateway is a serving gateway connected to the first station; or
receiving an identifier that is of a first gateway and sent by the information management entity, where the first gateway is a serving gateway connected to the first station; or
receiving a second response message sent by a second station, where the second response message includes an identifier of a second gateway; or
receiving a third response message sent by a second station, where the third response message is used to indicate whether the second station is connected to the user equipment gateway, or indicate agreeing to provide a service for the user equipment.

The output apparatus performs the following steps:
sending a first message to the information management entity, where the first message includes an IP address of the user equipment gateway and/or an identifier of the user equipment; and
sending a second message to a second station, where the second message includes an identifier of a first gateway, so that the second station returns an identifier of a second gateway, and the second gateway is a serving gateway connected to the second station; or
sending a third message to a second station, where the third message includes the identifier of the user equipment gateway, so that the second station determines, according to the identifier of the user equipment gateway and an identifier of a second gateway, whether the second station is connected to the user equipment gateway; and
if it is determined that the second station is connected to the user equipment gateway, sending, by the first station, a fourth message to the second station, where the fourth message is used to request the second station to provide a service for the user equipment, and the first station is a serving station of the user equipment.

The memory stores the following content:
The identifier of the first gateway or the second gateway includes any one of or a combination of more than one of an SGW ID, an SGW ID index, an SGW name, a PGW ID, a PGW ID index, and a PGW name.

The processor performs the following steps:
determining, according to the identifier of the user equipment gateway, a station connected to the user equipment gateway; and
determining, according to the identifier of the station connected to the user equipment gateway, the station connected to the user equipment gateway; or
determining, according to the identifier of the user equipment gateway and the identifier of the second gateway, whether the second station is connected to the user equipment gateway; or
determining, according to an indication of the third response message, whether the second station is connected to the user equipment gateway.

Still referring to FIG. 15, an embodiment of the present invention further provides an information management entity, which may include:
an input apparatus 1501, an output apparatus 1502, a memory 1503, and a processor 1504 (a quantity of processors in the information management entity may be one or more, and in FIG. 15, one processor is used as an example). In some embodiments of the present invention, the input apparatus 1501, the output apparatus 1502, the memory 1503, and the processor 1504 may be connected by using a bus or in another manner. In FIG. 15, a connection implemented by using a bus is used as an example.

The input apparatus performs the following step:
receiving a first message sent by a first station, where the first message includes an IP address of a user equipment gateway and/or an identifier of user equipment; or before the user equipment gateway is determined, further including: acquiring an identifier of the first station.

The output apparatus performs the following steps:
sending an identifier of the user equipment gateway to the first station, so that the first station determines, according to the identifier of the user equipment gateway, a station connected to the user equipment gateway; and
sending an identifier of a first gateway to the first station, or sending an identifier of a station connected to the first gateway.

The memory stores the following content:
The first message includes an S1 user equipment context setup request message or a bearer setup request message.

The processor performs the following step:
determining the user equipment gateway, where the user equipment gateway is a serving gateway connected to the first station and provides a service for the user equipment.

Specifically, the user equipment gateway may be determined according to the identifier of the user equipment.

Specifically, a fully qualified domain name of the first station may also be created according to the identifier of the first station, and a query may be performed on a DNS server according to the fully qualified domain name, to determine a serving gateway connected to the first station; or
a serving gateway connected to the first station may be determined according to the identifier of the first station and a serving gateway list stored in the information management entity, where the serving gateway list is a list of a correspondence between an identifier of a second station and a serving gateway.

For specific operation procedures of the foregoing station and information management entity, reference may be made to the foregoing method embodiments, and details are not described herein again.

An embodiment of the present invention provides an information determining method, including: receiving, by a first station, an identifier that is of a user equipment gateway and sent by an information management entity, where the user equipment gateway is a serving gateway connected to the first station and provides a service for user equipment; receiving configuration information provided by a second information management entity, where the configuration information includes an identifier of a second gateway and/or an identifier of a second station; determining, by the first station according to the identifier of the user equipment gateway, a station connected to the user equipment gateway; and determining, according to the identifier of the user equipment gateway and the identifier of the second gateway, whether the second station is connected to the user equipment gateway.

Before the receiving an identifier that is of a user equipment gateway and sent by an information management entity, the method further includes: sending, by the first station, a first message to the information management entity, where the first message includes an IP address of the user equipment gateway and/or an identifier of the user equipment.

The second gateway includes a serving gateway connected to the second station, and the second station includes a neighboring station of the first station.

After the determining, according to the identifier of the user equipment gateway, a station connected to the user equipment gateway, the method further includes:
if it is determined that the second station is connected to the user equipment gateway, sending, by the first station, a fourth message to the second station, where the fourth message is used to request the second station to provide a service for the user equipment, and the first station is a serving station of the user equipment.

The identifier of the second gateway includes any one of or a combination of more than one of an SGW ID, an SGW ID index, an SGW name, a PGW ID, a PGW ID index, and a PGW name; or an identifier of a serving gateway of a terminal includes any one of or a combination of more than one of an SGW ID, an SGW ID index, an SGW name, a PGW ID, a PGW ID index, and a PGW name.

An embodiment of the present invention provides an information determining method, including: providing, by a second information management entity, configuration information for a first station, where: the configuration information is used by the first station to decide a station connected to a user equipment gateway, and the user equipment gateway is a serving gateway connected to the first station and provides a service for user equipment; and the configuration information includes an identifier of a second gateway and/or an identifier of a second station.

An embodiment of the present invention provides a station, including: a receiving unit, configured to receive an identifier that is of a user equipment gateway and sent by an information management entity, where the user equipment gateway is a serving gateway connected to a first station and provides a service for user equipment; where the receiving unit is further configured to receive a second response message sent by a second station, where the second response message includes an identifier of a second gateway and/or an identifier of the second station; or receive configuration information provided by a second information management entity, where the configuration information includes an identifier of a second gateway and/or an identifier of a second station; and a connection determining unit, configured to determine, according to the identifier of the user equipment gateway and the identifier of the second gateway, whether the second station is connected to the user equipment gateway.

The station may further include a sending unit, configured to send a first message to the information management entity, where the first message includes an IP address of the user equipment gateway and/or an identifier of the user equipment.

The second gateway includes a serving gateway connected to the second station, and the second station includes a neighboring station of the first station.

Optionally, the sending unit is configured to: if the connection determining unit determines that the second station is connected to the user equipment gateway, send a fourth message to the second station, where the fourth message is used to request the second station to provide a service for the user equipment, and the first station is a serving station of the user equipment.

The identifier of the second gateway includes any one of or a combination of more than one of an SGW ID, an SGW ID index, an SGW name, a PGW ID, a PGW ID index, and a PGW name; or an identifier of a serving gateway of a terminal includes any one of or a combination of more than one of an SGW ID, an SGW ID index, an SGW name, a PGW ID, a PGW ID index, and a PGW name.

An embodiment of the present invention provides an information management entity, where: the information management entity is configured to provide configuration information for a first station, the configuration information is used by the first station to decide a station connected to a user equipment gateway, and the user equipment gateway is a serving gateway connected to the first station and provides a service for user equipment; and the configuration information includes an identifier of a second gateway and/or an identifier of a second station.

In the several embodiments provided in the present application, it should be understood that the disclosed apparatus and method may be implemented in other manners. For example, the described apparatus embodiment is merely exemplary. For example, the unit division is merely logical function division and there may be other division manners in actual implementation. For example, a plurality of units or components may be combined or integrated into another system, or some features may be ignored or not performed. In addition, the shown or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts shown as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such understanding, the technical solutions of the present invention essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An information determining method, **characterised by**:
receiving (303), by a first station, a first message sent by an information management entity, wherein the first message comprises information about a connection relationship between a second station and a serving gateway; and
determining (204), by the first station according to the first message, whether the second station is connected to a user equipment gateway, wherein the user equipment gateway is a serving gateway connected to the first station and provides a service for user equipment.

2. The method according to claim 1, wherein before the receiving (303) a first message sent by an information management entity, the method comprises:
sending (301), by the first station, a second message to the information management entity, wherein the second message comprises: an identifier of the second station, an identifier of the first station, or the identifier of the first station and the identifier of the second station.

3. The method according to claim 1, wherein before the receiving (303) a first message sent by an information management entity, the method comprises:
sending, by the first station, an identifier of the user equipment and/or an IP address of the user equipment gateway to the information management entity.

4. The method according to any one of claims 1 to 3, wherein:
the serving gateway comprises a first gateway or a second gateway, wherein the first gateway is a serving gateway connected to the first station, and the second gateway is a serving gateway connected to the second station; and
accordingly, the information about the connection relationship between the second station and the serving gateway comprises an identifier of the first gateway or an identifier of the second gateway.

5. The method according to any one of claims 1 to 3, wherein the information about the connection relationship between the second station and the serving gateway comprises:
information indicating whether the second station is connected to the user equipment gateway; or
an identifier of a second station connected to the user equipment gateway; or
an identifier of a second station not connected to the user equipment gateway.

6. The method according to claim 5, wherein the determining, according to the first message, whether the second station is connected to a user equipment gateway comprises:
determining (304), according to the information indicating whether the second station is connected to the user equipment gateway, whether the second station is connected to the user equipment gateway; or
determining (304), according to the identifier of the second station connected to the user equipment gateway or the identifier of the second station not connected to the user equipment gateway, whether the second station is connected to the user equipment gateway.

7. The method according to claim 4, wherein before the determining, according to the first message, whether the second station is connected to a user equipment gateway, the method further comprises:
acquiring, by the first station, an identifier of the user equipment gateway from the information management entity; and
the determining, according to the first message, whether the second station is connected to a user equipment gateway comprises:
determining, according to the identifier of the user equipment gateway and the identifier of the second gateway, whether the second station is connected to the user equipment gateway.

8. The method according to any one of claims 2 to 7, wherein before the sending (301), by the first station, a second message to the information management entity, the method comprises:
receiving, by the first station, a third message sent by the second station, wherein the third message is used to request the first station to provide a service for the user equipment, and the second station is a serving station of the user equipment.

9. The method according to claim 8, wherein after the determining (304), according to the first message, whether the second station is connected to a user equipment gateway, the method comprises:
if the second station is connected to the user equipment gateway, returning a fourth message to the second station, wherein the fourth message is used to indicate agreeing to provide a service for the user equipment;
or
if the second station is not connected to the user equipment gateway, returning a fifth message to the second station, wherein the fifth message is used to indicate refusing to provide a service for the user equipment.

10. The method according to any one of claims 1 to 7, wherein after the determining (304), according to the first message, whether the second station is connected to a user equipment gateway, the method comprises:
if the second station is connected to the user equipment gateway, sending, by the first station, a sixth message to the second station, wherein the sixth message is used to request the second station to provide a service for the user equipment, and the first station is a serving station of the user equipment.

11. The method according to claim 2 or 3, wherein:
the identifier of the first station comprises at least one of a tracking area identity TAI, a station identifier eNB ID, a station identifier index eNB ID index, and a cell global identifier ECGI.

12. The method according to any one of claims 2, 5, and 6, wherein:
the identifier of the second station comprises at least one of a tracking area identity TAI, a station identifier eNB ID, a station identifier index eNB ID index, and a cell global identifier ECGI.

13. An information determining method, **characterised by**:
determining (201), by an information management entity, information about a connection relationship between a second station and a serving gateway; and
sending (202), by the information management entity, a first message to a first station, so that the first station determines, according to the first message, whether the second station is connected to a user equipment gateway, wherein the first message comprises the information about the connection relationship between the second station and the serving gateway, and the user equipment gateway is a serving gateway connected to the first station and provides a service for user equipment.

14. The method according to claim 13, wherein:
the serving gateway comprises:
a second gateway, wherein the second gateway is a serving gateway connected to the second station; and
accordingly, the first message comprises/the information about the connection relationship between the second station and the serving gateway comprises: an identifier of the second gateway.

15. The method according to any one of claims 13 to 14, wherein that the first message comprises the information about the connection relationship between the second station and the serving gateway comprises:
information indicating whether the second station is connected to the user equipment gateway; or
an identifier of a second station connected to the user equipment gateway; or
an identifier of a second station not connected to the user equipment gateway.

## Patentansprüche

1. Informationsbestimmungsverfahren, **gekennzeichnet durch**:
Empfangen (303) durch eine erste Station einer ersten Nachricht, die durch eine Informationsmanagemententität gesendet wird, wobei die erste Nachricht Informationen über eine Verbindungsbeziehung zwischen einer zweiten Station und einem versorgenden Gateway umfasst; und
Bestimmen (204) durch die erste Station gemäß der ersten Nachricht, ob die zweite Station mit einem Anwendergeräte-Gateway verbunden ist, wobei das Anwendergeräte-Gateway ein versorgendes Gateway ist, das mit der ersten Station verbunden ist und einen Dienst für das Anwendergerät bereitstellt.

2. Verfahren nach Anspruch 1, wobei das Verfahren vor dem Empfangen (303) einer ersten Nachricht, die durch eine Informationsmanagemententität gesendet wird, Folgendes umfasst:
Senden (301) durch die erste Station einer zweiten Nachricht zu der Informationsmanagemententität, wobei die zweite Nachricht Folgendes umfasst: eine Kennung der zweiten Station, eine Kennung der ersten Station oder die Kennung der ersten Station und die Kennung der zweiten Station.

3. Verfahren nach Anspruch 1, wobei das Verfahren vor dem Empfangen (303) einer ersten Nachricht, die durch eine Informationsmanagemententität gesendet wird, Folgendes umfasst:
Senden durch die erste Station einer Kennung des Anwendergeräts und/oder einer IP-Adresse des Anwendergeräte-Gateway zu der Informationsmanagemententität.

4. Verfahren nach einem der Ansprüche 1 bis 3, wobei:
das versorgende Gateway ein erstes Gateway oder ein zweites Gateway umfasst, wobei das erste Gateway ein versorgendes Gateway ist, das mit der ersten Station verbunden ist, und das zweite Gateway ein versorgendes Gateway ist, das mit der zweiten Station verbunden ist; und
dementsprechend die Informationen über die Verbindungsbeziehung zwischen der zweiten Station und dem versorgenden Gateway eine Kennung des ersten Gateway oder eine Kennung des zweiten Gateway umfassen.

5. Verfahren nach einem der Ansprüche 1 bis 3, wobei die Informationen über die Verbindungsbeziehung zwischen der zweiten Station und dem versorgenden Gateway Folgendes umfassen:
Informationen, die angeben, ob die zweite Station mit dem Anwendergeräte-Gateway verbunden ist; oder
eine Kennung einer zweiten Station, die mit dem Anwendergeräte-Gateway verbunden ist; oder
eine Kennung einer zweiten Station, die nicht mit dem Anwendergeräte-Gateway verbunden ist.

6. Verfahren nach Anspruch 5, wobei das Bestimmen gemäß der ersten Nachricht, ob die zweite Station mit einem Anwendergeräte-Gateway verbunden ist, Folgendes umfasst:
Bestimmen (304) gemäß den Informationen, die angeben, ob die zweite Station mit dem Anwendergeräte-Gateway verbunden ist, ob die zweite Station mit dem Anwendergeräte-Gateway verbunden ist; oder
Bestimmen (304) gemäß der Kennung der zweiten Station, die mit dem Anwendergeräte-Gateway verbunden ist, oder der Kennung der zweiten Station, die nicht mit dem Anwendergeräte-Gateway verbunden ist, ob die zweite Station mit dem Anwendergeräte-Gateway verbunden ist.

7. Verfahren nach Anspruch 4, wobei das Verfahren vor dem Bestimmen gemäß der ersten Nachricht, ob die zweite Station mit einem Anwendergeräte-Gateway verbunden ist, ferner Folgendes umfasst:
Erhalten durch die erste Station einer Kennung des Anwendergeräte-Gateway von der Informationsmanagemententität; und
wobei das Bestimmen gemäß der ersten Nachricht, ob die zweite Station mit einem Anwendergeräte-Gateway verbunden ist, Folgendes umfasst:
Bestimmen gemäß der Kennung des Anwendergeräte-Gateway und der Kennung des zweiten Gateway, ob die zweite Station mit dem Anwendergeräte-Gateway verbunden ist.

8. Verfahren nach einem der Ansprüche 2 bis 7, wobei das Verfahren vor dem Senden (301) durch die erste Station einer zweiten Nachricht zu der Informationsmanagemententität Folgendes umfasst:
Empfangen durch die erste Station einer dritten Nachricht, die durch die zweite Station gesendet wird, wobei die dritte Nachricht verwendet wird, um von der ersten Station anzufordern, einen Dienst für das Anwendergerät bereitzustellen, und die zweite Station eine versorgende Station des Anwendergeräts ist.

9. Verfahren nach Anspruch 8, wobei das Verfahren nach dem Bestimmen (304) gemäß der ersten Nachricht, ob die zweite Station mit einem Anwendergeräte-Gateway verbunden ist, Folgendes umfasst:
falls die zweite Station mit dem Anwendergeräte-Gateway verbunden ist, Zurückgeben einer vierten Nachricht zu der zweiten Station, wobei die vierte Nachricht verwendet wird, um Zustimmung anzugeben, einen Dienst für das Anwendergerät bereitzustellen; oder
falls die zweite Station nicht mit dem Anwendergeräte-Gateway verbunden ist, Zurückgeben einer fünften Nachricht zu der zweiten Station, wobei die fünfte Nachricht verwendet wird, um Ablehnung anzugeben, einen Dienst für das Anwendergerät bereitzustellen.

10. Verfahren nach einem der Ansprüche 1 bis 7, wobei das Verfahren nach dem Bestimmen (304) gemäß der ersten Nachricht, ob die zweite Station mit einem Anwendergeräte-Gateway verbunden ist, Folgendes umfasst:
falls die zweite Station mit dem Anwendergeräte-Gateway verbunden ist, Senden durch die erste Station einer sechsten Nachricht zu der zweiten Station, wobei die sechste Nachricht verwendet wird, um von der zweiten Station anzufordern, einen Dienst für das Anwendergerät bereitzustellen, und die erste Station eine versorgende Station des Anwendergeräts ist.

11. Verfahren nach Anspruch 2 oder 3, wobei:
die Kennung der ersten Station wenigstens eines aus einer Verfolgungsbereichskennung, TAI, einer Stationskennung, eNB ID, einem Stationskennungsindex, eNB ID-Index, und einer globalen Zellenkennung ECGI umfasst.

12. Verfahren nach einem der Ansprüche 2, 5 und 6, und wobei:
die Kennung der zweiten Station wenigstens eines aus einer Verfolgungsbereichskennung, TAI, einer Stationskennung, eNB ID, einem Stationskennungsindex, eNB ID-Index, und einer globalen Zellenkennung ECGI umfasst.

13. Informationsbestimmungsverfahren, **gekennzeichnet durch**:
Bestimmen (201) durch eine Informationsmanagemententität von Informationen über eine Verbindungsbeziehung zwischen einer zweiten Station und einem versorgenden Gateway; und
Senden (202) durch die Informationsmanagemententität einer ersten Nachricht zu einer ersten Station, so dass die erste Station gemäß der ersten Nachricht bestimmt, ob die zweite Station mit einem Anwendergeräte-Gateway verbunden ist, wobei die erste Nachricht Informationen über die Verbindungsbeziehung zwischen der zweiten Station und dem versorgenden Gateway umfasst und das Anwendergeräte-Gateway ein versorgendes Gateway ist, das mit der ersten Station verbunden ist und einen Dienst für das Anwendergerät bereitstellt.

14. Verfahren nach Anspruch 13, wobei:
das versorgende Gateway Folgendes umfasst:
ein zweites Gateway, wobei das zweite Gateway ein versorgendes Gateway ist, das mit der zweiten Station verbunden ist; und
dementsprechend die erste Nachricht umfasst/die Informationen über die Verbindungsbeziehung zwischen der zweiten Station und dem versorgenden Gateway und das versorgende Gateway Folgendes umfasst: eine Kennung des zweiten Gateway.

15. Verfahren nach einem der Ansprüche 13 bis 14, wobei dass die erste Nachricht die Informationen über die Verbindungsbeziehung zwischen der zweiten Station und dem versorgenden Gateway umfasst, Folgendes umfasst:
Informationen, die angeben, ob die zweite Station mit dem Anwendergeräte-Gateway verbunden ist; oder
eine Kennung einer zweiten Station, die mit dem Anwendergeräte-Gateway verbunden ist; oder
eine Kennung einer zweiten Station, die nicht mit dem Anwendergeräte-Gateway verbunden ist.

## Revendications

1. Procédé de détermination d'informations, **caractérisé par** :
la réception (303), par une première station, d'un premier message envoyé par une entité de gestion d'informations, dans lequel le premier message comprend des informations relatives à une relation de connexion entre une seconde station et une passerelle de desserte ; et
la détermination (204), par la première station en fonction du premier message, que la seconde station est connectée ou non à une passerelle d'équipement utilisateur, dans lequel la passerelle d'équipement utilisateur est une passerelle de desserte connectée à la première station et fournissant un service à un équipement utilisateur.

2. Procédé selon la revendication 1, le procédé comprenant, avant la réception (303) d'un premier message envoyé par une entité de gestion d'informations :
l'envoi (301), par la première station, d'un deuxième message à l'entité de gestion d'informations, dans lequel le deuxième message comprend : un identifiant de la seconde station, un identifiant de la première station, ou l'identifiant de la première station et l'identifiant de la seconde station.

3. Procédé selon la revendication 1, le procédé comprenant, avant la réception (303) d'un premier message envoyé par une entité de gestion d'informations :
l'envoi, par la première station, d'un identifiant de l'équipement utilisateur et/ou d'une adresse IP de la passerelle d'équipement utilisateur à l'entité de gestion d'informations.

4. Procédé selon l'une quelconque des revendications 1 à 3, dans lequel :
la passerelle de desserte comprend une première passerelle ou une seconde passerelle, dans lequel la première passerelle est une passerelle de desserte connectée à la première station, et la seconde passerelle est une passerelle de desserte connectée à la seconde station ; et
en conséquence, les informations relatives à la relation de connexion entre la seconde station et la passerelle de desserte comprennent un identifiant de la première passerelle ou un identifiant de la seconde passerelle.

5. Procédé selon l'une quelconque des revendications 1 à 3, dans lequel les informations relatives à la relation de connexion entre la seconde station et la passerelle de desserte comprennent :
des informations indiquant que la seconde station est connectée ou non à la passerelle d'équipement utilisateur ; ou
un identifiant d'une seconde station connectée à la passerelle d'équipement utilisateur ; ou
un identifiant d'une seconde station non connectée à la passerelle d'équipement utilisateur.

6. Procédé selon la revendication 5, dans lequel la détermination, en fonction du premier message, que la seconde station est connectée ou non à une passerelle d'équipement utilisateur comprend :
la détermination (304), en fonction des informations indiquant que la seconde station est connectée ou non à la passerelle d'équipement utilisateur, que la seconde station est connectée à la passerelle d'équipement utilisateur ; ou
la détermination (304), en fonction de l'identifiant de la seconde station connectée à la passerelle d'équipement utilisateur ou à l'identifiant de la seconde station non connectée à la passerelle d'équipement utilisateur, que la seconde station est connectée ou non à la passerelle d'équipement utilisateur.

7. Procédé selon la revendication 4, le procédé comprenant en outre, avant la détermination, en fonction du premier message, que la seconde station est connectée ou non à une passerelle d'équipement utilisateur :
l'acquisition, par la première station, d'un identifiant de la passerelle d'équipement utilisateur auprès de l'entité de gestion d'informations ; et
la détermination, en fonction du premier message, que la seconde station est connectée ou non à une passerelle d'équipement utilisateur comprend :
la détermination, en fonction de l'identifiant de la passerelle d'équipement utilisateur et de l'identifiant de la seconde passerelle, que la seconde station est connectée ou non à la passerelle d'équipement utilisateur.

8. Procédé selon l'une quelconque des revendications 2 à 7, le procédé comprenant, avant l'envoi (301), par la première station, d'un deuxième message à l'entité de gestion d'informations :
la réception, par la première station, d'un troisième message envoyé par la seconde station, dans lequel le troisième message sert à demander à la première station de fournir un service à l'équipement utilisateur, et la seconde station est une station de desserte de l'équipement utilisateur.

9. Procédé selon la revendication 8, le procédé comprenant, après la détermination (304), en fonction du premier message, que la seconde station est connectée ou non à une passerelle d'équipement utilisateur :
si la seconde station est connectée à la passerelle d'équipement utilisateur, le renvoi d'un quatrième message à la seconde station, dans lequel le quatrième message sert à indiquer un accord de fourniture d'un service à l'équipement utilisateur ;
ou
si la seconde station n'est pas connectée à la passerelle d'équipement utilisateur, le renvoi d'un cinquième message à la seconde station, dans lequel le cinquième message sert à indiquer le refus de la fourniture d'un service à l'équipement utilisateur.

10. Procédé selon l'une quelconque des revendications 1 à 7, le procédé comprenant, après la détermination (304), en fonction du premier message, que la seconde station est connectée ou non à une passerelle d'équipement utilisateur :
si la seconde station est connectée à la passerelle d'équipement utilisateur, l'envoi, par la première station, d'un sixième message à la seconde station, dans lequel le sixième message sert à demander à la seconde station de fournir un service à l'équipement utilisateur, et la première station est une station de desserte de l'équipement utilisateur.

11. Procédé selon la revendication 2 ou 3, dans lequel :
l'identifiant de la première station comprend au moins l'un d'une identité de zone de suivi TAI, d'un identifiant de station eNB ID, d'un indice d'identifiant de station indice eNB ID , et d'un identifiant global de cellule ECGI.

12. Procédé selon l'une quelconque des revendications 2, 5 et 6, dans lequel :
l'identifiant de la seconde station comprend au moins l'un d'une identité de zone de suivi TAI, d'un identifiant de station eNB ID, d'un indice d'identifiant de station indice eNB ID , et d'un identifiant global de cellule ECGI.

13. Procédé de détermination d'informations, **caractérisé par** :
la détermination (201), par une entité de gestion d'informations, d'informations relatives à une relation de connexion entre une seconde station et une passerelle de desserte ; et
l'envoi (202), par l'entité de gestion d'informations, d'un premier message à une première station, de telle sorte que la première station détermine, en fonction du premier message, que la seconde station est connectée ou non à une passerelle d'équipement utilisateur, dans lequel le premier message comprend les informations relatives à la relation de connexion entre la seconde station et la passerelle de desserte, et la passerelle d'équipement utilisateur est une passerelle de desserte connectée à la première station et fournissant un service à un équipement utilisateur.

14. Procédé selon la revendication 13, dans lequel :
la passerelle de desserte comprend :
une seconde passerelle, dans lequel la seconde passerelle est une passerelle de desserte connectée à la seconde station ; et
en conséquence, le premier message comprend/les informations relatives à la relation de connexion entre la seconde station et la passerelle de desserte comprend : un identifiant de la seconde passerelle.

15. Procédé selon l'une quelconque des revendications 13 à 14, dans lequel le fait que le premier message comprenne les informations relatives à la relation de connexion entre la seconde station et la passerelle de desserte comprend :
des informations indiquant que la seconde station est connectée ou non à la passerelle d'équipement utilisateur ; ou
un identifiant d'une seconde station connectée à la passerelle d'équipement utilisateur ; ou
un identifiant d'une seconde station non connectée à la passerelle d'équipement utilisateur.
